# EUROPEAN PATENT APPLICATION

(11) **EP 4 498 215 A1**
(43) Date of publication of application: **29.01.2025**
(21) Application number: 23810993.8
(22) Date of filing: 22.05.2023
(51) Int. Cl.: G06F 3/0481

(54) **WIDGET MANAGEMENT METHOD, ELECTRONIC DEVICE, AND COMPUTER-READABLE STORAGE MEDIUM**

(30) Priority: 27.05.2022 CN 202210593919
(71) Applicant: Huawei Technologies Co., Ltd., Shenzhen, Guangdong 518129 (CN)
(72) Inventor: NI, Hongfeng, Shenzhen, Guangdong 518129 (CN); DING, Yaling, Shenzhen, Guangdong 518129 (CN); ZHANG, Jing, Shenzhen, Guangdong 518129 (CN); MI, Yuhao, Shenzhen, Guangdong 518129 (CN)
(74) Representative: Isarpatent
(86) International application number: PCT/CN2023/095475
(87) International publication number: WO 2023/226922

(57) **Abstract**

This application is applicable to the field of human-computer interaction, and provides a card management method, an electronic device, and a computer-readable storage medium. In the method provided in embodiments of this application, an electronic device may display a first interface of a first application. When a user wants to generate a service card related to the first application, the user may perform a first operation in the first interface. In this case, the electronic device may obtain a display element corresponding to the first interface or the first application in response to the first operation. Subsequently, the electronic device may generate a combined card based on the display element, to adapt to an actual use requirement of the user. This resolves a problem of low flexibility and limited application scenarios of a current service card to some extent, and has strong usability and practicability.

## Description

This application claims priority to Chinese Patent Application No. 202210593919.0, filed with the China National Intellectual Property Administration on May 27, 2022 and entitled "CARD MANAGEMENT METHOD, ELECTRONIC DEVICE, AND COMPUTER-READABLE STORAGE MEDIUM", which is incorporated herein by reference in its entirety.

### TECHNICAL FIELD

This application relates to the field of human-computer interaction, and in particular, to a card management method, an electronic device, and a computer-readable storage medium.

### BACKGROUND

A service card is an important human-computer interaction manner. An electronic device may present some simplified information and provide a simple function and/or an operation interface direct to a specific application/function for a user by using the service card, to provide great convenience for the user.

A current service card is mainly set by research and development personnel of a device vendor or a third-party software provider in advance. Different users may have different use requirements. Therefore, the service card provided by the device vendor or the third-party software provider may not meet the use requirements of the users, and an application scenario of the service card is limited.

### SUMMARY

Embodiments of this application provide a card management method, an electronic device, and a computer-readable storage medium, to resolve a problem of low flexibility and limited application scenarios of a current service card.

According to a first aspect, an embodiment of this application provides a card management method, including:
displaying a first interface of a first application;
detecting a first operation of a user on the first interface;
obtaining a display element of the first interface or the first application in response to the first operation; and
generating a combined card based on the display element of the first interface or the first application.

It should be noted that, in the card management method provided in this embodiment of this application, an electronic device may display the first interface of the first application.

Subsequently, if the user wants to generate the combined card related to the first interface or the first application, the user may perform the first operation in the first interface.

The electronic device may obtain the display element of the first interface or the first application in response to the first operation.

The display element may be understood as an entry of an application or a function, and may provide the user with some simplified information, a simple function, and/or an operation interface directly to a specific application/function.

Then, the electronic device may generate the combined card based on the display element corresponding to the first interface or the first application.

A part of display elements may be displayed on the first interface or another interface of the first application. For a display element, a style of displaying the display element on an interface of an application and a style of displaying the display element on the combined card may be a same style or may be different styles.

In a possible implementation of the first aspect, the first interface includes M display elements; and
the generating a combined card based on the display element of the first interface or the first application specifically includes:
detecting a first selection operation of selecting N display elements from the M display elements by the user, where M is greater than or equal to N, and M and N are positive integers; and
generating a combined card including the N display elements.

It should be noted that, in some embodiments, in response to the first operation of the user, the electronic device may prompt the M display elements included in the first interface. For example, in some examples, the electronic device may display selection controls in the upper left corners of the M display elements.

After viewing the M display elements, the user may perform a first selection operation to select, from the M display elements, the N display elements that meet an actual requirement of the user.

Then, in response to the first selection operation, the electronic device may generate the combined card including the N display elements.

According to the foregoing method, the user may select a required display element from the first interface based on the actual requirement of the user, so that the combined card generated by the electronic device better meets an actual use requirement of the user, to improve use experience of the user.

In a possible implementation of the first aspect, the generating a combined card based on the display element of the first interface or the first application includes:
displaying a second interface, where the second interface includes X display elements of the first application;
detecting a second selection operation of selecting Y display elements from the X display elements by the user, where X is greater than or equal to Y, and X and Y are positive integers; and
generating a combined card including the Y display elements.

It should be noted that, in some other embodiments, the electronic device may display the second interface in response to the first operation of the user, and the second interface may include the X display elements of the first application.

After viewing the second interface, the user may perform a second selection operation to select the required Y display elements from the X display elements.

Then, in response to the second selection operation, the electronic device may generate the combined card including the Y display elements.

According to the foregoing method, the electronic device may present the display element of the first application to the user, so that the user can more flexibly select a required display element. Therefore, the combined card generated by the electronic device better meets an actual use requirement of the user, and use experience of the user is improved.

In a possible implementation of the first aspect, the displaying a second interface specifically includes:
displaying a to-be-edited combined card in a first area of the second interface, and displaying the X display elements in a second area of the second interface.

In a possible implementation of the first aspect, the second selection operation includes:
dragging the Y display elements displayed in the second area to the first area.

It should be noted that when displaying the second interface, the electronic device may display the to-be-edited combined card in the first area of the second interface, and display the X display elements in the second area of the second interface.

After viewing the second interface, the user may drag, through dragging a display element, the Y required display elements to the first area in which the to-be-edited combined card is located.

In this case, the electronic device may add the Y display elements to the to-be-edited combined card in response to the operation of the user, to obtain a combined card required the user.

According to the foregoing method, the user may add a display element by dragging the display element. This is easy to operate and convenient to use, and can effectively improve use experience of the user.

In a possible implementation of the first aspect, the second interface further includes a first control, and the first control is used to adjust a size of the combined card; and
before the generating a combined card including the Y display elements, the method further includes:
detecting a second operation of the user on the first control; and
adjusting a size of the to-be-edited combined card in response to the second operation.

It should be noted that, in some embodiments, the second interface may further display the first control, and the first control may be used to adjust the size of the combined card.

When the user wants to adjust the size of the to-be-edited combined card, the user may perform the second operation on the first control.

After detecting the second operation, the electronic device may adjust the size of the to-be-edited combined card.

The adjusting, by the electronic device, the size of the to-be-edited combined card may be increasing the size of the to-be-edited combined card, or may be decreasing the size of the to-be-edited combined card.

In a possible implementation of the first aspect, the method further includes:
displaying the generated combined card on a home screen, where the combined card includes a first display element and a second display element;
detecting a removal operation of the user on the first display element; and
in response to the removal operation, removing the first display element displayed in the combined card.

It should be noted that, after generating the combined card, the electronic device may display the combined card on the home screen. The combined card may include the first display element and the second display element.

When the user wants to remove the first display element from the combined card, the user may perform the removal operation on the first display element on the home screen.

In response to the removal operation, the electronic device may remove the first display element displayed in the combined card.

In a possible implementation of the first aspect, the removal operation on the first display element specifically includes:
dragging the first display element out of a third area that displays the combined card.

It should be noted that a representation form of the removal operation may be determined according to an actual requirement. In some embodiments, the removal operation may be represented as: The user drags the first display element out of the third area in which the combined card is located.

In a possible implementation of the first aspect, the method further includes:
displaying the generated combined card on a home screen, where the home screen further includes a third display element;
detecting an addition operation of the user on the third display element; and
in response to the addition operation, displaying a combined card including the third display element.

It should be noted that, in some embodiments, in addition to the foregoing combined card, the home screen may further include some other display elements, for example, the third display element.

When the user wants to add the third display element to the combined card, the user may perform the addition operation on the third display element.

In response to the addition operation, the electronic device may add the third display element to the combined card, and display the combined card including the third display element.

In a possible implementation of the first aspect, before the displaying a combined card including the third display element, the method further includes:
if space occupied by the third display element is greater than remaining space of the combined card, increasing the size of the combined card, so that the remaining space of the combined card is greater than or equal to the space occupied by the third display element.

It should be noted that, in some embodiments, the space occupied by the third display element may be greater than the remaining space of the combined card. In this case, the electronic device cannot directly add the third display element to the combined card.

Therefore, when the space occupied by the third display element is greater than the remaining space of the combined card, the electronic device may increase the size of the combined card, so that the remaining space of the combined card is greater than or equal to the space occupied by the third display element, and the combined card has sufficient space to accommodate the third display element.

In a possible implementation of the first aspect, the method further includes:
displaying the generated combined card on a home screen;
detecting a third operation of the user on the combined card; and
displaying an editing menu of the combined card in response to the third operation, where the editing menu of the combined card includes an editing option for editing the combined card.

It should be noted that, in some embodiments, when the electronic device displays the combined card on the home screen, if the user wants to edit the combined card, the user may perform the third operation on the combined card.

The electronic device may display the editing menu of the combined card in response to the third operation. The editing menu of the combined card may include one or more editing options.

Subsequently, the user may edit the combined card by using an editing option in the editing menu of the combined card.

In a possible implementation of the first aspect, the combined card includes a fourth display element, and the method further includes:
displaying the generated combined card on a home screen;
detecting a fourth operation of the user on the fourth display element; and
displaying an editing menu of the fourth display element in response to the fourth operation, where the editing menu of the fourth display element includes an editing option for editing the fourth display element.

It should be noted that, in some other embodiments, the combined card further includes the fourth display element.

When the user wants to separately edit the fourth display element, the user may perform the fourth operation on the fourth display element.

The electronic device may display an editing operation of the fourth display element in response to the fourth operation. The editing menu of the fourth display element may include one or more editing options.

Subsequently, the user may edit the fourth display element by using an editing option in the editing menu of the fourth display element.

In addition, it should be noted that specific representation forms of the operations in the foregoing embodiment may be determined according to an actual requirement. This is not limited in this application.

The first display element, the second display element, the third display element, and the fourth display element may be a same display element, or may be different display elements.

According to a second aspect, an embodiment of this application provides a card management method, including:
displaying a search interface;
receiving a search word entered by a user;
performing a search based on the search word, and displaying P search results;
detecting a third selection operation of selecting Q search results from the P search results by the user, where P is greater than or equal to Q, and P and Q are positive integers; and
generating, based on the Q search results, a combined card including at least one display element.

It should be noted that, in the card management method provided in this embodiment, an electronic device may display the search interface for the user.

After viewing the search interface, the user may enter the search word on the search interface.

The electronic device may perform a search based on the search word, and display the P found search results. The search results may include an application and/or a function. The function may be a function in an application, or may be a function provided by a system.

After viewing the P search results, the user may perform the third selection operation to select, from the P search results, the Q search results required by the user.

In response to the third selection operation, the electronic device may obtain display elements corresponding to the Q search results, and generate, based on the display elements corresponding to the Q search results, a combined card including at least one display element.

In some other embodiments, after performing a search based on the search word, the electronic device may directly display a combined card for the user. The combined card includes display elements corresponding to an application/a function found by the electronic device.

According to a third aspect, an embodiment of this application provides a card management apparatus, including:
an interface display module, configured to display a first interface of a first application;
a first operation module, configured to detect a first operation of a user on the first interface;
an element obtaining module, configured to obtain a display element of the first interface or the first application in response to the first operation; and
a card generation module, configured to generate a combined card based on the display element of the first interface or the first application.

In a possible implementation of the third aspect, the first interface includes M display elements; and
the card generation module is specifically configured to:
detect a first selection operation of selecting N display elements from the M display elements by the user, where M is greater than or equal to N, and M and N are positive integers; and
generate a combined card including the N display elements.

In a possible implementation of the third aspect, the card generation module is specifically configured to:
display a second interface, where the second interface includes X display elements of the first application;
detect a second selection operation of selecting Y display elements from the X display elements by the user, where X is greater than or equal to Y, and X and Y are positive integers; and
generate a combined card including the Y display elements.

In a possible implementation of the third aspect, the displaying a second interface specifically includes:
displaying a to-be-edited combined card in a first area of the second interface, and displaying the X display elements in a second area of the second interface.

In a possible implementation of the third aspect, the second selection operation includes:
dragging the Y display elements displayed in the second area to the first area.

In a possible implementation of the third aspect, the second interface further includes a first control, and the first control is used to adjust a size of the combined card; and
the card generation module is further configured to:
detect a second operation of the user on the first control; and
adjust a size of the to-be-edited combined card in response to the second operation.

In a possible implementation of the third aspect, the apparatus further includes:
a home screen display module, configured to display the generated combined card on a home screen, where the combined card includes a first display element and a second display element;
a removal operation module, configured to detect a removal operation of the user on the first display element; and
an element removal module, configured to: in response to the removal operation, remove the first display element displayed in the combined card.

In a possible implementation of the third aspect, the removal operation on the first display element specifically includes:
dragging the first display element out of a third area that displays the combined card.

In a possible implementation of the third aspect, the apparatus further includes:
a home screen display module, configured to display the generated combined card on a home screen, where the home screen further includes a third display element;
an addition operation module, configured to detect an addition operation of the user on the third display element; and
an element adding module, configured to: in response to the addition operation, display a combined card including the third display element.

In a possible implementation of the third aspect, the apparatus further includes:
a size adjustment module, configured to: if space occupied by the third display element is greater than remaining space of the combined card, increase the size of the combined card, so that the remaining space of the combined card is greater than or equal to the space occupied by the third display element.

In a possible implementation of the third aspect, the apparatus further includes:
a home screen display module, configured to display the generated combined card on a home screen;
a third operation module, configured to detect a third operation of the user on the combined card; and
a card menu module, configured to display an editing menu of the combined card in response to the third operation, where the editing menu of the combined card includes an editing option for editing the combined card.

In a possible implementation of the third aspect, the combined card includes a fourth display element, and the apparatus further includes:
a home screen display module, configured to display the generated combined card on a home screen;
a fourth operation module, configured to detect a fourth operation of the user on the fourth display element; and
an element menu module, configured to display an editing menu of the fourth display element in response to the fourth operation, where the editing menu of the fourth display element includes an editing option for editing the fourth display element.

According to a fourth aspect, an embodiment of this application provides a card management apparatus, including:
a search interface module, configured to display a search interface;
a search enter module, configured to receive a search word entered by a user;
a result display module, configured to perform a search based on the search word, and display P search results;
a result selection module, configured to detect a third selection operation of selecting Q search results from the P search results by the user, where P is greater than or equal to Q, and P and Q are positive integers; and
a card generation module, configured to generate, based on the Q search results, a combined card including at least one display element.

According to a fifth aspect, an embodiment of this application provides an electronic device, including a memory, a processor, and a computer program that is stored in the memory and that may be executed on the processor. When the processor is configured to execute the computer program, the electronic device is enabled to perform the method according to any one of the first aspect or the second aspect.

According to a sixth aspect, an embodiment of this application provides a computer-readable storage medium. The computer-readable storage medium is configured to store a computer program, and when the computer program is executed by a processor, the method according to any one of the first aspect or the second aspect is implemented.

According to a seventh aspect, an embodiment of this application provides a computer program product. When the computer program product is configured to run on an electronic device, the electronic device is enabled to perform the method according to any one of the first aspect or the second aspect.

According to an eighth aspect, an embodiment of this application provides a chip system. The chip system includes a memory and a processor, and the processor is configured to execute a computer program stored in the memory, to implement the method according to any one of the first aspect or the second aspect.

Beneficial effects of embodiments of this application compared with a conventional technology are as follows:
In the method provided in embodiments of this application, the electronic device may display the first interface of the first application. When the user wants to generate a service card related to the first application, the user may perform the first operation in the first interface. In this case, the electronic device may obtain the display element corresponding to the first interface or the first application in response to the first operation. Subsequently, the electronic device may generate the combined card based on the display element, to adapt to an actual use requirement of the user. This resolves a problem of low flexibility and limited application scenarios of a current service card to some extent.

### BRIEF DESCRIPTION OF DRAWINGS

FIG. 1 is a diagram of a structure of an electronic device according to an embodiment of this application;
FIG. 2 is a block diagram of a software structure of a software system according to an embodiment of this application;
FIG. 3A and FIG. 3B are a diagram of a scenario according to an embodiment of this application;
FIG. 4A and FIG. 4B are a diagram of another scenario according to an embodiment of this application;
FIG. 5A and FIG. 5B are a diagram of another scenario according to an embodiment of this application;
FIG. 6A and FIG. 6B are a diagram of another scenario according to an embodiment of this application;
FIG. 7A and FIG. 7B are a diagram of another scenario according to an embodiment of this application;
FIG. 8A and FIG. 8B are a diagram of another scenario according to an embodiment of this application;
FIG. 9A to FIG. 9C are a diagram of another scenario according to an embodiment of this application;
FIG. 10A and FIG. 10B are a diagram of another scenario according to an embodiment of this application;
FIG. 11A and FIG. 11B are a diagram of another scenario according to an embodiment of this application;
FIG. 12A and FIG. 12B are a diagram of another scenario according to an embodiment of this application;
FIG. 13A to FIG. 13C are a diagram of another scenario according to an embodiment of this application;
FIG. 14A to FIG. 14C are a diagram of another scenario according to an embodiment of this application;
FIG. 15A to FIG. 15C are a diagram of another scenario according to an embodiment of this application;
FIG. 16A to FIG. 16C are a diagram of another scenario according to an embodiment of this application;
FIG. 17A to FIG. 17C are a diagram of another scenario according to an embodiment of this application;
FIG. 18A and FIG. 18B are a diagram of another scenario according to an embodiment of this application;
FIG. 19A and FIG. 19B are a diagram of another scenario according to an embodiment of this application;
FIG. 20A and FIG. 20B are a diagram of another scenario according to an embodiment of this application;
FIG. 21A and FIG. 21B are a diagram of another scenario according to an embodiment of this application;
FIG. 22A and FIG. 22B are a diagram of another scenario according to an embodiment of this application;
FIG. 23A to FIG. 23C are a diagram of another scenario according to an embodiment of this application;
FIG. 24A and FIG. 24B are a diagram of another scenario according to an embodiment of this application;
FIG. 25A and FIG. 25B are a diagram of another scenario according to an embodiment of this application;
FIG. 26A and FIG. 26B are a diagram of another scenario according to an embodiment of this application;
FIG. 27A and FIG. 27B are a diagram of another scenario according to an embodiment of this application;
FIG. 28 is a diagram of another scenario according to an embodiment of this application;
FIG. 29A to FIG. 29C are a diagram of another scenario according to an embodiment of this application;
FIG. 30A and FIG. 30B are a diagram of another scenario according to an embodiment of this application;
FIG. 31A and FIG. 31B are a diagram of another scenario according to an embodiment of this application;
FIG. 32A and FIG. 32B are a diagram of another scenario according to an embodiment of this application;
FIG. 33A to FIG. 33C are a diagram of another scenario according to an embodiment of this application;
FIG. 34A and FIG. 34B are a diagram of another scenario according to an embodiment of this application;
FIG. 35A to FIG. 35C are a diagram of another scenario according to an embodiment of this application; and
FIG. 36A and FIG. 36B are a diagram of another scenario according to an embodiment of this application.

### DESCRIPTION OF EMBODIMENTS

In the following description, to illustrate rather than limit, specific details such as a particular system structure and a technology are provided, to make a thorough understanding of embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that when used in the specification and the appended claims of this application, the term "including" indicates presence of the described features, entireties, steps, operations, card elements and/or components, but does not exclude presence or addition of one or more other features, entireties, steps, operations, card elements, components, and/or collections thereof.

It should be further understood that the term "and/or" used in the specification and claims of this application indicates any combination and all possible combinations of one or more items listed in association, and includes the combinations.

As used in the specification and claims of this application, the term "if" may be interpreted as "when", "once", "in response to determining", or "in response to detecting" depending on the context. Similarly, the phrase "if it is determined" or "if the [described condition or event] is detected" may be interpreted as meaning "once determined", "in response to determining", "once the [described condition or event] is detected", or "in response to detecting the [described condition or event]" depending on the context.

In addition, in the description of the specification and claims of this application, the terms "first", "second", "third", and the like are merely intended for a purpose of differentiated description, but shall not be understood as an indication or an implication of relative importance.

Referring to "an embodiment", "some embodiments", or the like in the specification of this application means that one or more embodiments of this application include a specific feature, structure, or characteristic described with reference to the embodiment. Therefore, in this specification, statements such as "in an embodiment", "in some embodiments", "in some other embodiments", and "in other embodiments" that appear at different places do not necessarily mean a same embodiment, but mean "one or more but not all of the embodiments", unless otherwise specified. The terms "include", "comprise", "have", and variants of the terms all mean "include but are not limited to", unless otherwise specifically emphasized.

A "shortcut" described in the specification of this application may be understood as an entry of a system application, a third-party application, or a function in an application. When a user performs an operation on the shortcut, an electronic device may directly provide a specific function for the user in response to the operation of the user; or the electronic device may enter an operation interface of an application/a function corresponding to the shortcut.

The shortcut may include one or more of controls such as a widget, an application icon, a function icon, and a card. For ease of understanding, in the following description of this application, a card shortcut is defined as a service card, and other types of shortcuts are collectively referred to as shortcuts.

A service card is an important human-computer interaction manner. The electronic device may present some simplified information and provide a simple function and/or an operation interface directly to a specific application/function to a user by using the service card, to provide great convenience for the user.

A current service card is developed and designed by research and development personnel of a device vendor or a third-party software provider. Information and a function provided by the service card are fixed.

Different users may have different use requirements. Therefore, the service card provided by the device vendor or the third-party software provider may not meet the use requirements of the users, and an application scenario of the service card is limited.

In view of this, embodiments of this application provide a card management method. In response to an operation of a user, the electronic device may create and edit a combined card that meets an actual use requirement of the user, to resolve a problem of low flexibility and limited application scenarios of the current service card to some extent. This has strong usability and practicability.

The card management method provided in embodiments of this application may be applied to an electronic device such as a mobile phone, a tablet computer, an in-vehicle device, an augmented reality (augmented reality, AR)/virtual reality (virtual reality, VR) device, a wearable device, a notebook computer, a desktop computer, an ultra-mobile personal computer (ultra-mobile personal computer, UMPC), a personal digital assistant (personal digital assistant, PDA), a netbook, or a smart screen. A specific type of the electronic device is not limited in embodiments of this application.

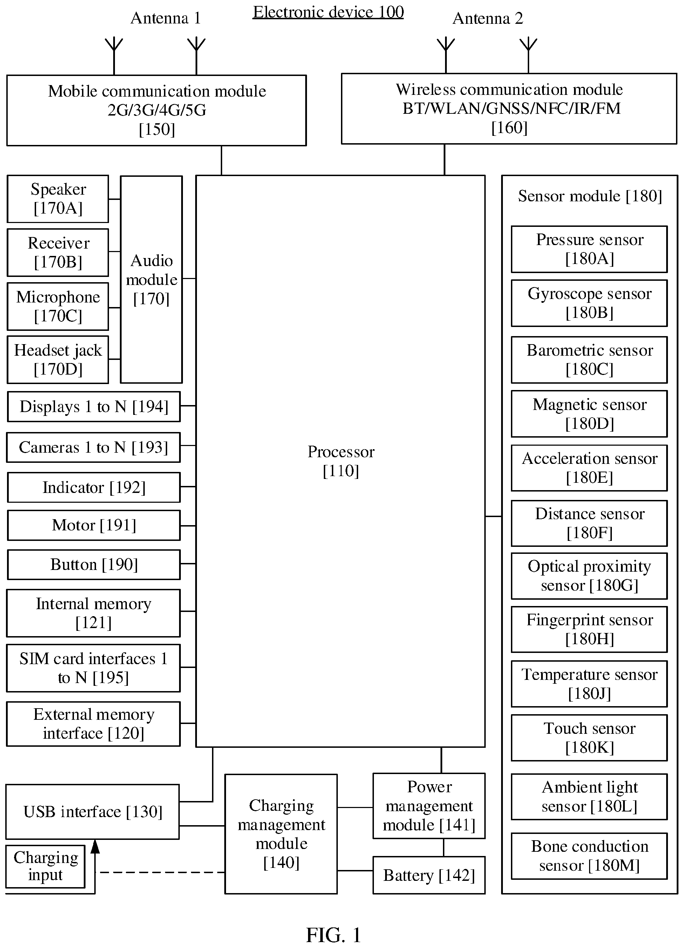

FIG. 1 is an example of a diagram of a structure of an electronic device 100 according to an embodiment of this application.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be used to transfer data between the electronic device 100 and a peripheral device, or may be configured to connect to a headset for playing audio by using the headset. The interface may be further configured to connect to another electronic device such as an AR device.

It may be understood that the interface connection relationships between the modules shown in this embodiment of the present invention are merely an example for description, and do not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may also be configured to monitor parameters such as a battery capacity, a number of battery cycles, and a battery health status (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application (for example, a sound playing function or an image playing function) required by at least one function, and the like. The data storage area may store data (such as audio data and a phone book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or audio information is received by using the electronic device 100, the receiver 170B may be put close to a human ear to listen to a voice.

The microphone 170C, also referred to as a "mike" or a "mic", is configured to convert a sound signal into an electrical signal. When making a call or sending audio information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messaging application icon, an instruction to view an SMS message is performed. When a touch operation whose touch operation intensity is greater than or equal to the first pressure threshold is performed on the Messaging application icon, an instruction to create a new SMS message is performed.

The gyroscope sensor 180B may be configured to determine a motion gesture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric sensor 180C is configured to measure barometric pressure. In some embodiments, the electronic device 100 calculates an altitude through the barometric pressure measured by the barometric sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may further be compatible with an external memory card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The foregoing describes a possible diagram of a hardware structure of the electronic device 100. A software system of the electronic device 100 may adopt a layered architecture, an event-driven architecture, a microkernel architecture, a microservice architecture, or a cloud architecture. In embodiments of this application, an Android (Android) system with a layered architecture is used as an example to describe the software structure of the electronic device 100.

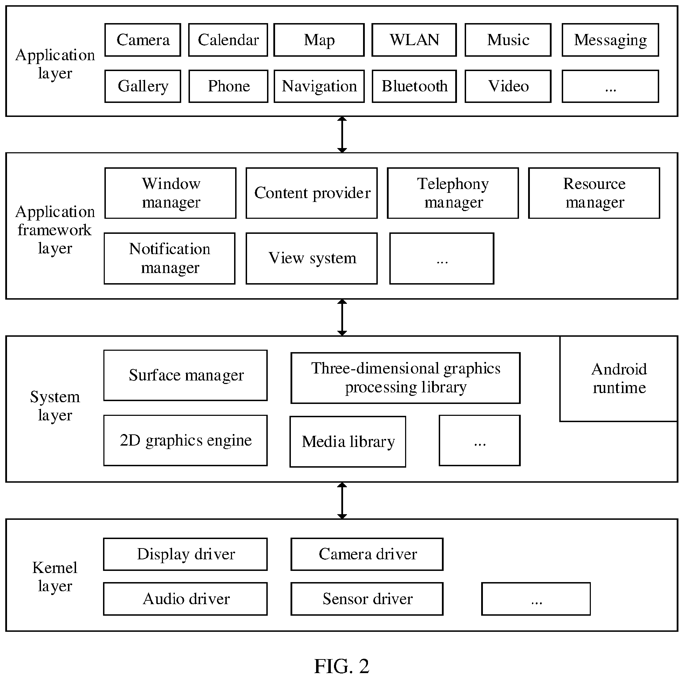

FIG. 2 is a block diagram of the software structure of the electronic device 100 in this embodiment of this application. In a layered architecture, software is divided into several layers, and each layer has a clear role and task. The layers communicate with each other through a software interface. In some embodiments, the Android system is divided into four layers: an application (application, APP) layer, an application framework (framework) layer, an Android runtime (Android runtime) and a system layer, and a kernel layer from top to bottom.

The application layer may include a series of application packages. As shown in FIG. 2, an application package may include applications such as Camera, Gallery, Calendar, Calls, Maps, Navigation, WLAN, Bluetooth, Music, Videos, and Messaging. An application is mainly based on a user interface (user interface, UI), and is usually compiled by invoking an interface of the application framework layer by using a Java language.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a telephony manager, a resource manager, a notification manager, and the like.

The window manager is configured to manage a window program. The window manager may obtain a size of the display, determine whether there is a status bar, perform screen locking, take a screenshot, and the like. For example, the window manager may obtain a size of a to-be-displayed window on the electronic device 100 and determine content of the to-be-displayed window. It should be understood that the to-be-displayed window of the electronic device 100 may include a window that is being displayed on the electronic device, and may further include a window (for example, a minimized window) of one or more applications that run in the background of the electronic device 100.

The window manager is a service (service). It is a global and unique C++ service that is independent of Android applications. The window manager is shared by all Android applications. A window management system of the Android system is based on a client/service (client/service, C/S) mode, and an entire window system is divided into two parts: a service (service) and a client (client). The client is an application that requests to create and use a window. The service is a window manager, is also referred to as a window manager service (window manager service, WMS), and is responsible for window maintaining and window displaying. The client does not directly interact with the window manager service WMS, but directly interacts with a local object window manager (window manager). Then, the window manager (window manager) interacts with the window manager service WMS. The interaction is transparent to the application, and the application cannot sense existence of the window manager service.

In an application framework of the Android system, windows are mainly classified into two types: an application window and a public interface window. In an application window, an activity (Activity) (also referred to as an instance in other systems) has a main window and a plurality of child windows. For example, a pop-up dialog box or menu (menu) is a child window. In a same activity, a main window and a child window are associated through the activity. A child window cannot exist independently and needs to be attached to a parent window. The public interface window is also referred to as a system window, includes a recent running dialog box, a shutdown dialog box, a status bar drop-down bar, a lock screen interface, and the like. The system window does not belong to any application and is not related to an activity.

A window may be understood as a rectangular area on a screen, and can display a user interface (user interface, UI) and interact with a user. In some embodiments, the window may also hide the user interface (that is, an operation interface of software), and when the user needs to perform an operation, quickly present application navigation and a function operation to the user, or expand an operation interface of an application again according to a triggered instruction. From the perspective of a system, the window is actually a surface (surface). A screen may have a plurality of windows. Layout, sequence, and window animation of the plurality of windows are managed by the window manager service WMS, and content mixing and display of the plurality of surfaces are implemented by a SurfaceFlinger service. The windows are layered. A window with a higher level is displayed above a window with a lower level, and covers the window with a lower level.

It should be understood that, in embodiments of this application, the Android system is merely used as an example to describe a corresponding window manager mechanism. A window control method provided in embodiments of this application may be applied to another system, for example, a Macintosh (Mac) system, a Microsoft Windows (Windows) system, or a HarmonyOS system. For different electronic devices and different systems, a window manager mechanism may be different. Specifically, a corresponding technology needs to be used to create and manage a window according to an actual situation. This application is merely described as an example herein, and should not be construed as a limitation on this application.

The content provider is configured to: store and obtain data, and enable the data to be accessed by an application. The data may include a video, an image, audio, calls that are made and answered, a browsing history and a bookmark, an address book, and the like.

The view system includes visual controls, such as a control for displaying text, a control for displaying pictures, and the like. The view system may be configured to build an application. A display interface may be formed by one or more views. For example, a display interface including a message notification icon may include a view for displaying a text and a view for displaying a picture.

The telephony manager is configured to provide a communication function for the electronic device 100. For example, the communication function includes call status management (including calling-up, hang-up, and the like).

The resource manager provides various resources for an application, such as a localized character string, an icon, an image, a layout file, a video file, and the like.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the terminal device vibrates, and the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system layer is a support of the application framework, and is an important link that connects the application framework layer and the kernel layer. The system layer may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software, and is used to provide essential functions of a system, such as file management, memory management, process management, and a network protocol. The kernel layer includes at least a display driver, a camera driver, an audio driver, and a sensor driver.

With reference to the electronic device shown in FIG. 1 and FIG. 2 and specific application scenarios, the following describes in detail the card management method provided in embodiments of this application.

### 1. Create a combined card.

### 1.1. Create a combined card in an application.

In this embodiment of this application, when a user wants to create a combined card corresponding to a first application, the user may perform a first operation in a first interface of the first application.

A specific representation form of the first operation may be set according to an actual requirement. For example, the first operation may include any one or a combination of a plurality of operations such as a tap operation, a touch and hold operation, and a swipe operation.

After detecting the first operation, the electronic device may generate the combined card corresponding to the first application based on a card element corresponding to the first application.

The combined card may include one or more card elements corresponding to the first application. The card element (that is, a display element) may include a service card and/or shortcut.

Specifically, in some embodiments, after detecting the first operation, the electronic device may automatically generate the combined card corresponding to the first application based on a card element corresponding to the first application.

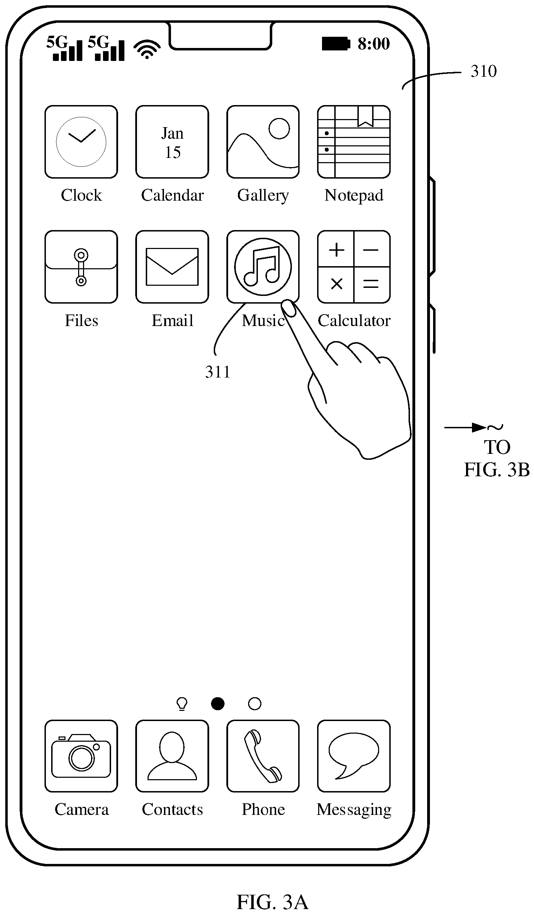

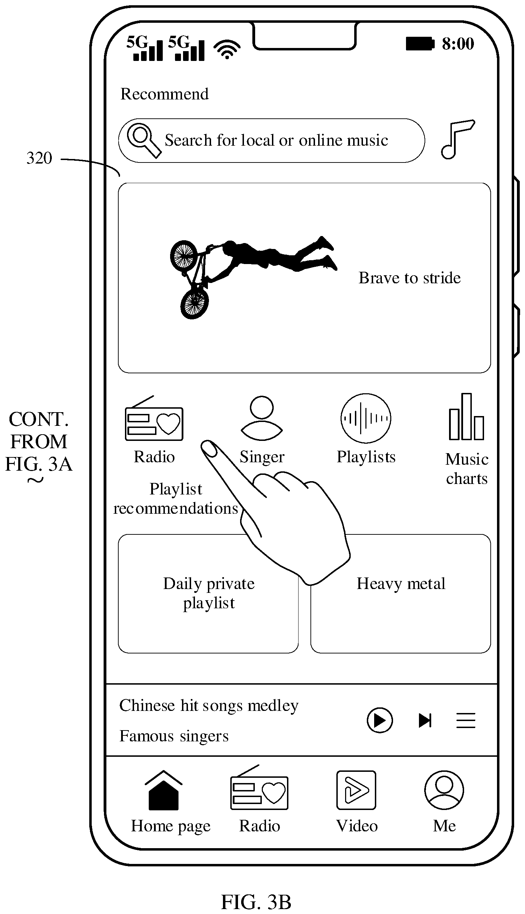

For example, as shown in FIG. 3A and FIG. 3B, assuming that the user wants to generate a service card related to a "Music" application, the user may tap an icon 311 of the "Music" application on a home screen 310 of the electronic device.

In this case, the electronic device may enter a home page 320 of the "Music" application in response to the tap operation of the user on the icon 311.

Subsequently, the user may perform the first operation in the home page 320. For example, the user may touch and hold a blank area of the home page 320; or the user may touch and hold a control on the home page 320; or the user may perform the first operation in another form.

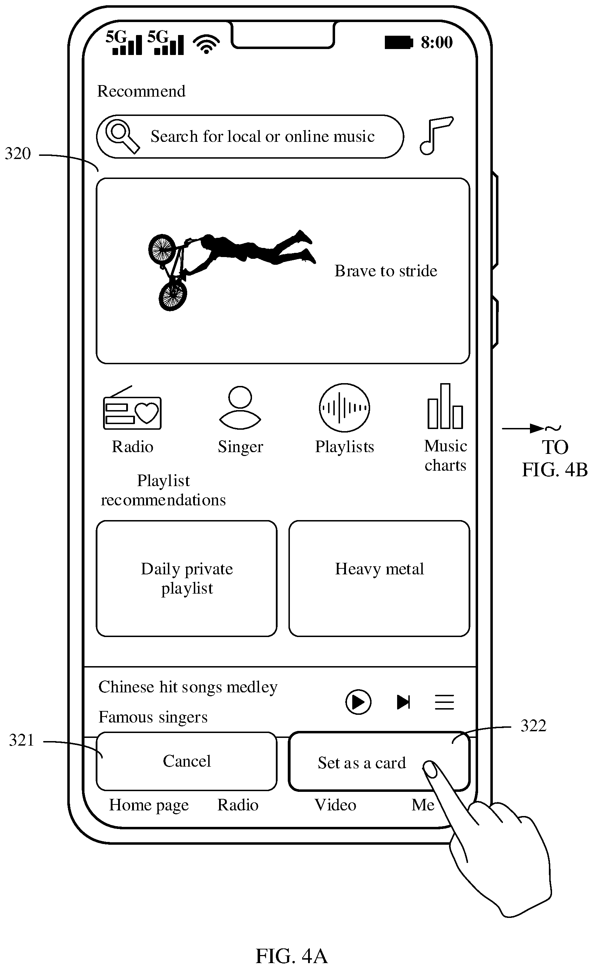

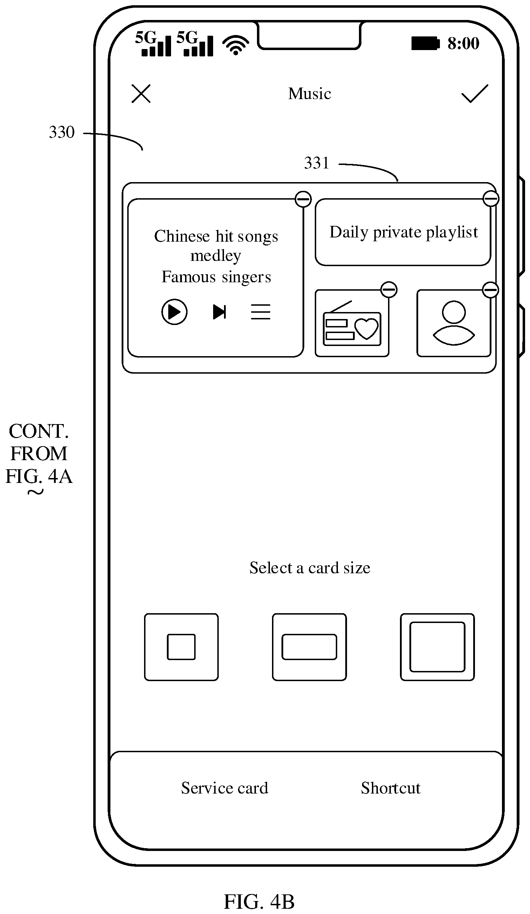

As shown in FIG. 4A and FIG. 4B, after the electronic device detects the first operation, the electronic device may display a "Cancel" control 321 and a "Set as a card" control 322.

After the user taps the control 322, the electronic device may enter a card editing interface 330 (that is, a second interface), and display a combined card 331 corresponding to the "Music" application in the card editing interface 330.

The combined card 331 is generated by the electronic device based on a card element corresponding to the "Music" application.

Alternatively, in another example, after detecting the first operation, the electronic device may directly enter the card editing interface 330 without displaying the "Cancel" control 321 or the "Set as a card" control 322.

In another example, when generating the combined card 331, the electronic device may generate the combined card based on a card element corresponding to the first interface. For example, after detecting the first operation on the home page 320, the electronic device may generate the combined card 331 based on a card element corresponding to the home page 320. In this case, the combined card 331 may not include a card element corresponding to another interface of the "Music" application.

It can be learned from the foregoing examples that, in the method provided in this embodiment of this application, the user may determine the first application and perform the first operation in the first interface of the first application according to a requirement of the user. Then, the electronic device may generate the combined card corresponding to the first application in response to the first operation, to adapt to an actual use requirement of the user. This resolves a problem of low flexibility and limited application scenarios of a current service card to some extent.

In addition, after the electronic device generates the combined card, the user may want to perform personalized editing on the combined card.

In this case, the user may perform an editing operation on the combined card. The editing operation may include any one or more of operations such as adjusting a size of the combined card, adding a card element, deleting a card element, and renaming the combined card.

After detecting the editing operation, the electronic device may adjust the combined card based on the editing operation.

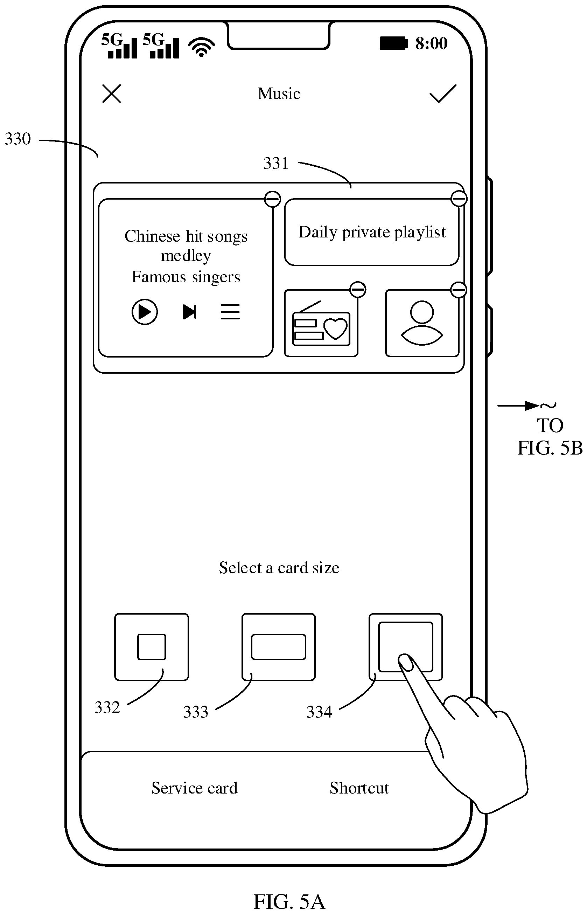

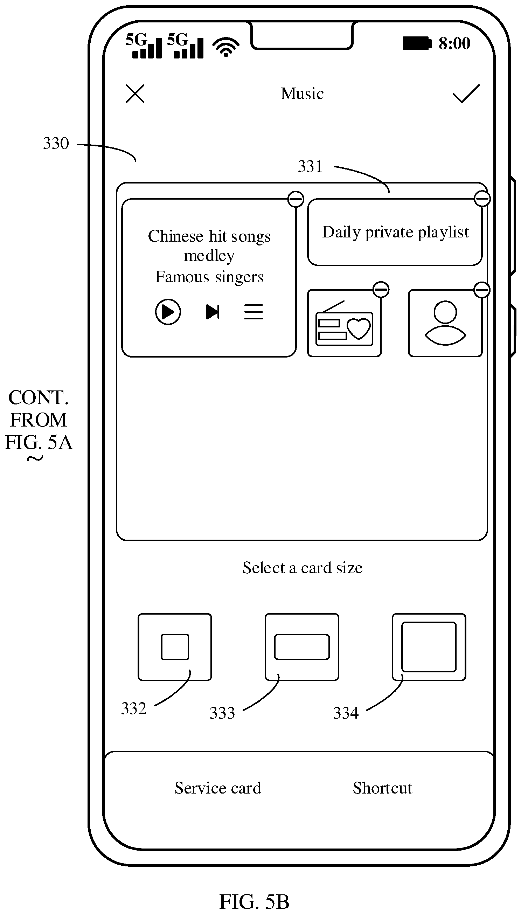

For example, as shown in FIG. 5A and FIG. 5B, it is assumed that a current size of the combined card 331 is 2*4, and the card editing interface 330 displays a size adjustment control 332, a size adjustment control 333, and a size adjustment control 334 (that is, a first control).

A card size corresponding to the size adjustment control 332 is 2*2, a card size corresponding to the size adjustment control 333 is 2*4, and a card size corresponding to the size adjustment control 334 is 4*4.

After viewing the combined card 331, the user taps the size adjustment control 334.

In this case, the electronic device may adjust the size of the combined card 334 331 from 2*4 to 4*4 in response the tap operation of the user on the size adjustment control 334.

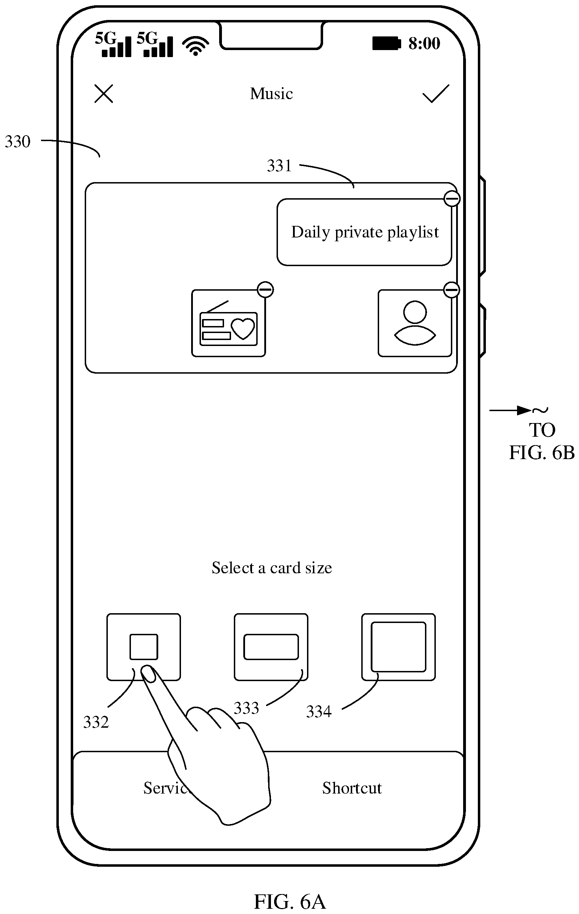

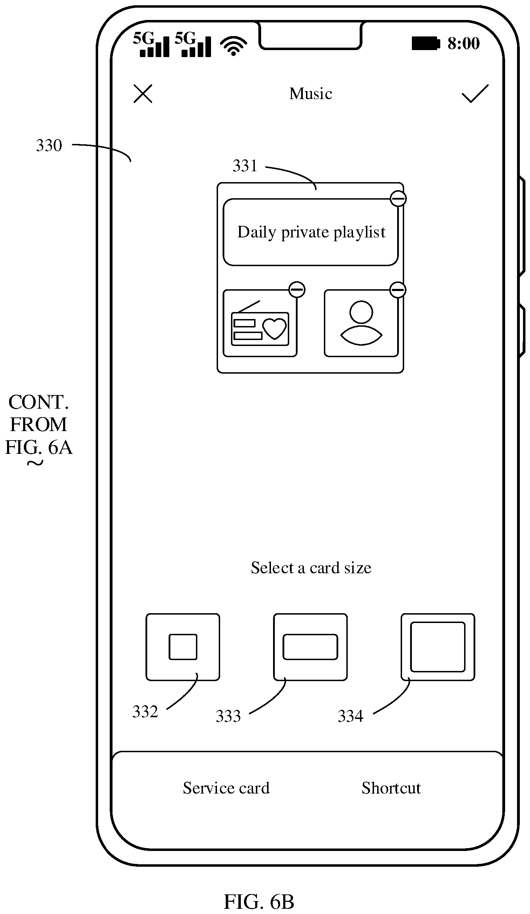

In another example, as shown in FIG. 6A and FIG. 6B, the user taps the size adjustment control 332.

In this case, because the size corresponding to the size adjustment control 332 is 2*2, and is less than the current size 2*4 of the combined card 331, the electronic device may detect whether a sum of space occupied by all card elements in the combined card 331 matches the size 2*2 corresponding to the size adjustment control 332.

Subsequently, the electronic device detects that the sum of space occupied by all the card elements in the combined card 331 is 4, and is within an accommodation range of the size 2*2. Therefore, the electronic device may adjust the size of the combined card 331 from 2*4 to 2*2.

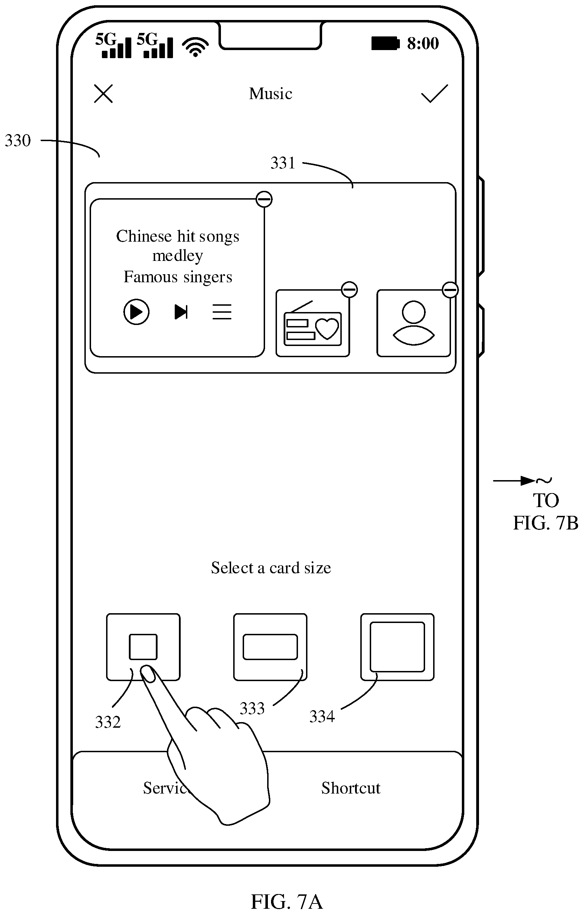

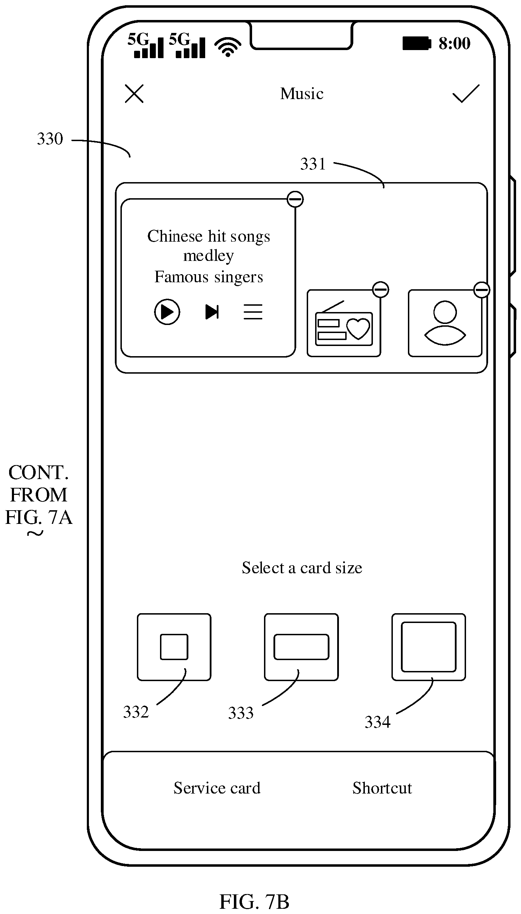

In another example, as shown in FIG. 7A and FIG. 7B, after the user taps the size adjustment control 332, the electronic device detects that the sum of space occupied by all the card elements in the combined card 331 is 6, and exceeds the accommodation range of the size 2*2.

In this case, the electronic device may not respond to the tap operation of the user. Alternatively, the electronic device may prompt the user that the size does not match, so that the user re-adjusts the size of the combined card 331 after viewing the prompt.

In another example, when the user wants to adjust the size of the combined card 331, the user may also drag a boundary line of the combined card 331.

In this case, the electronic device may adjust a boundary line position of the combined card 331 in response to the drag operation of the user, to adjust the size of the combined card 331.

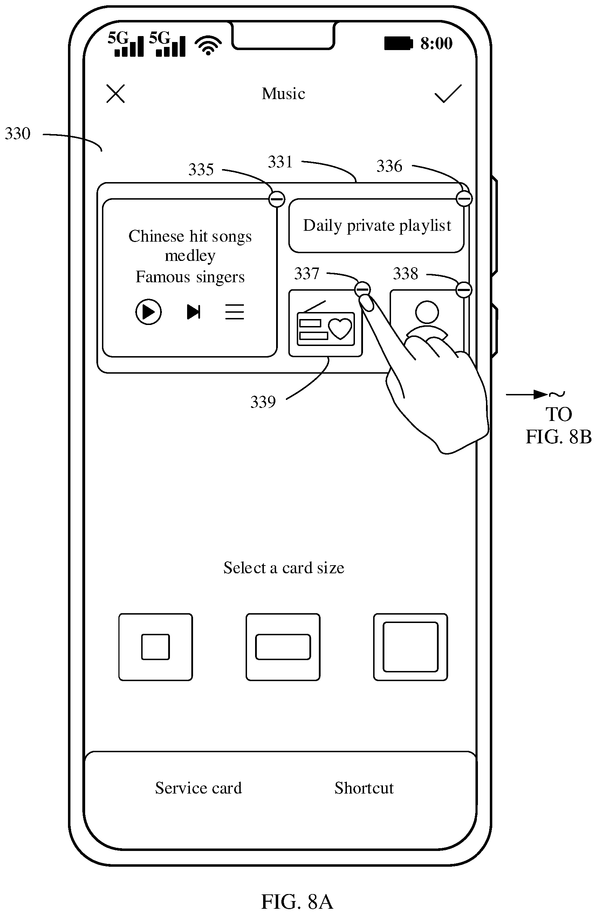

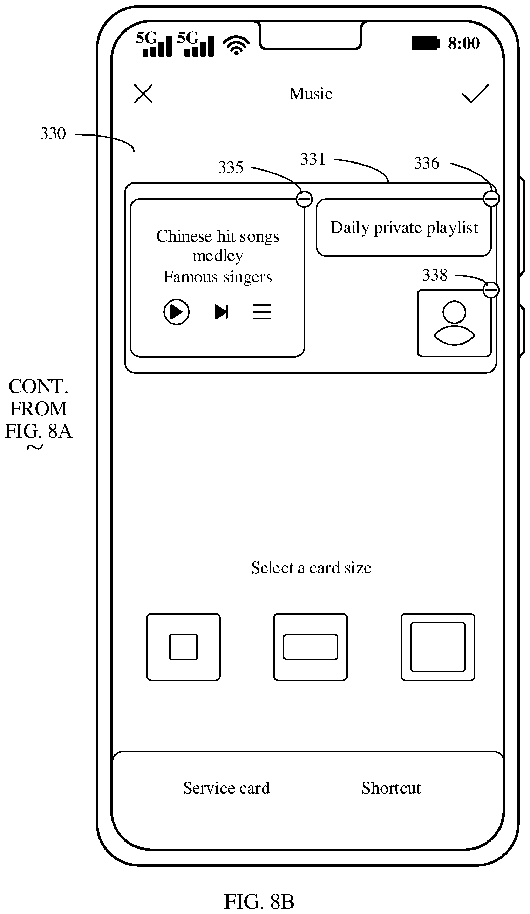

In another example, as shown in FIG. 8A and FIG. 8B, in the card editing interface 330, the combined card 331 includes four card elements, and a deletion control used to delete a card element is displayed in the upper right corner of each card element. The deletion controls are a control 335, a control 336, a control 337, and a control 338.

Assuming that the user wants to delete a card element 339 in the combined card 331, the user may tap the control 337 in the upper right corner of the card element 339.

In this case, the electronic device may delete the card element 339 corresponding to the control 337 in response to the tap operation of the user on the control 337.

In another example, when the user wants to delete a card element in the combined card 331, the user may also drag the card element out of an area in which the combined card 331 is located.

In this case, in response to the drag operation of the user, the electronic device may delete the card element that is dragged out of the area in which the combined card 331 is located.

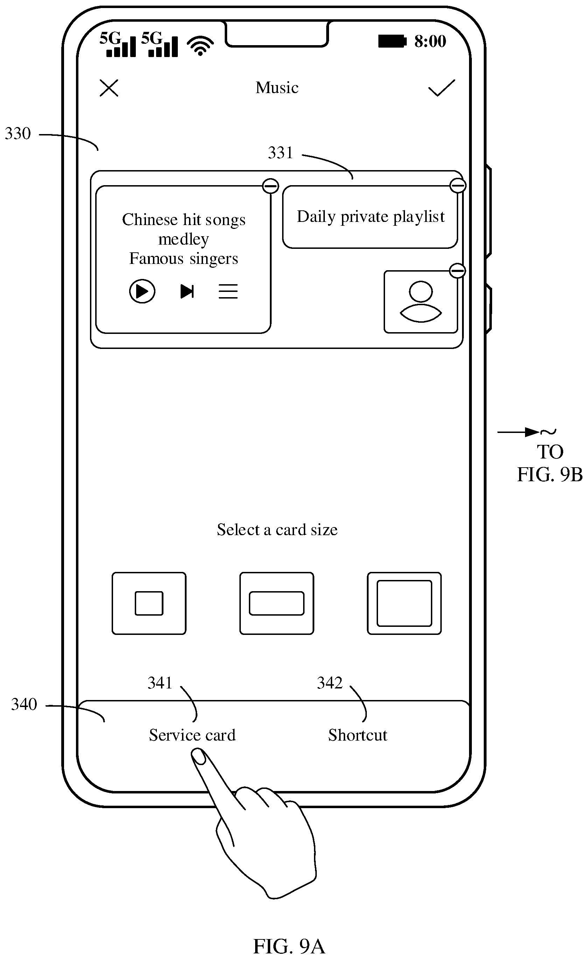

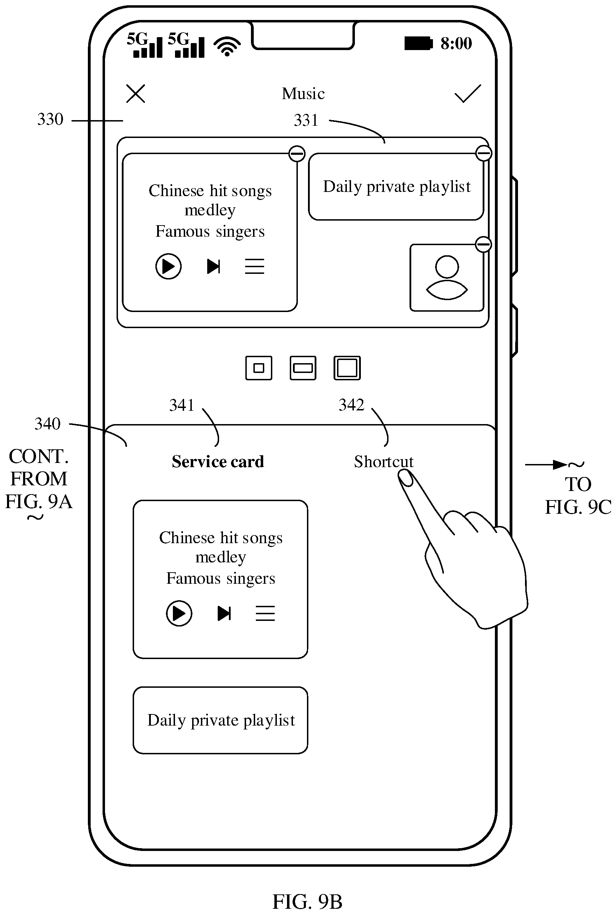

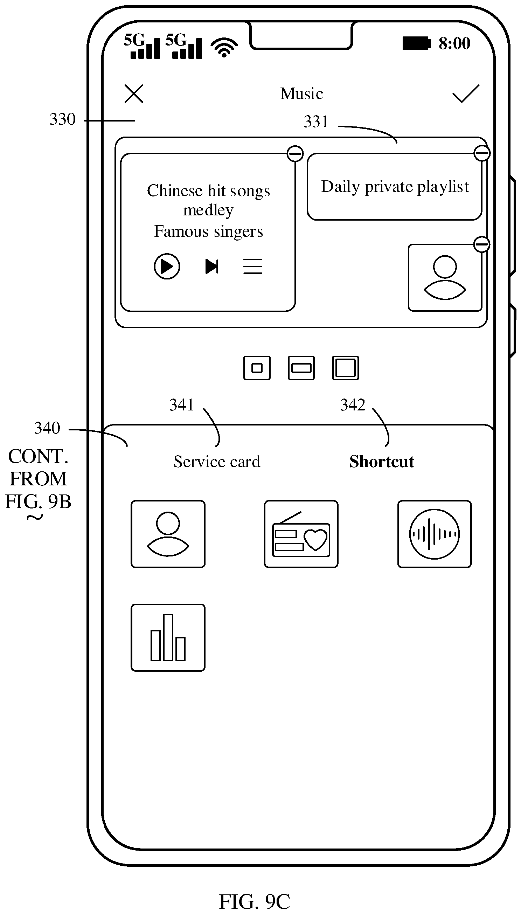

In another example, as shown in FIG. 9A to FIG. 9C, the card editing interface 330 may further include a material library 340 (that is, a second area), and the material library 340 includes a "Service card" control 341 and a "Shortcut" control 342.

When the user wants to view a service card included in the material library 340, the user may tap the control 341. In this case, the electronic device may display a service card corresponding to the "Music" application in the material library 340 in response to the tap operation of the user.

When the user wants to view a shortcut included in the material library 340, the user may tap the control 342. In this case, the electronic device may display a shortcut corresponding to the "Music" application in the material library 340 in response to the tap operation of the user.

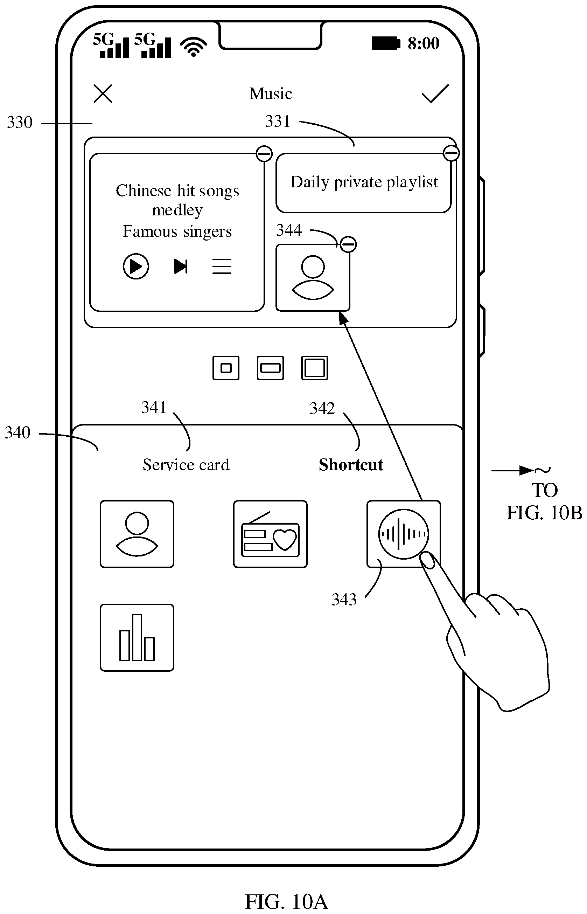

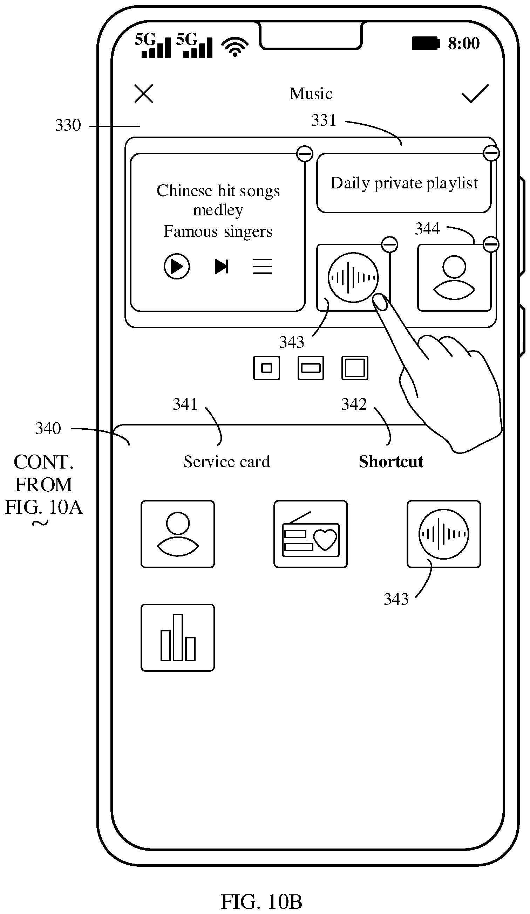

Subsequently, as shown in FIG. 10A and FIG. 10B, assuming that the user wants to add a card element 343 in the material library 340 to the combined card 331, the user may touch and hold the card element 343 to select the card element 343, and drag the card element 343 to the area (that is, a first area) in which the combined card 331 is located.

In this case, the electronic device may add the card element 343 to the combined card 331 in response to the drag operation of the user.

If the card element 343 is dragged by the user to an unoccupied position in the combined card 331, the electronic device may directly place the card element 343 in the position.

If the card element 343 is dragged by the user to a position occupied by a card element (for example, a position occupied by a card element 344), the electronic device may move the card element 344 to another position in the combined card 331 in a moving squeezing manner, and place the card element 343 in a position in which the card element 344 is located before moving.

In another example, the electronic device may also display, in the upper right corner of each card element in the material library, an addition control used to add the card element.

When the user wants to add a card element, the user may tap an addition control displayed in the upper right corner of the card element.

In this case, the electronic device may add the card element to the combined card 331 in response to the tap operation of the user.

In another example, the material library 340 may include all service cards and shortcuts of the electronic device, so that the user can more flexibly select a card element included in the combined card 331.

In another example, the material library 340 may include all service cards and shortcuts of the first application, and does not include a card element corresponding to another application/function.

In another example, the material library 340 may include all service cards and shortcuts of the first interface, and does not include a card element corresponding to another application/function, nor include a card element corresponding to another interface of the first application.

In another example, the material library 340 may not display a card element that already exists in the combined card 331, to improve efficiency of selecting a card element by the user.

In another example, the material library 340 may not display a deleted card element, so that the user does not add an unwanted card element by mistake.

According to the method shown in the foregoing examples, the electronic device may adjust the size of the combined card and a card element in the combined card in response to an editing operation of the user, so that the combined card better meets an actual requirement of the user, and use experience of the user is improved.

It may be understood that the editing operation and the adjustment manner shown in the foregoing examples are merely examples of this embodiment of this application. In some other embodiments, the editing operation may also be represented in another representation form, and the electronic device may adjust the combined card in another adjustment manner. Specific representation forms of the editing operation and the adjustment manner are not limited in this embodiment of this application.

After the electronic device displays the combined card or adjusts the combined card, if the user wants to retain the combined card, the user may perform a saving operation on the electronic device.

In this case, the electronic device may save the combined card in response to the saving operation.

When saving the combined card, the electronic device may save the combined card in a service center for a subsequent invocation requirement of the user, where the service center is an application that is in the electronic device and that is responsible for managing each service card and a customized combined card; and/or
when saving the combined card, the electronic device may display the combined card in a specified position. The specified position may be any one of positions such as a home screen blank area, a stacked card set, a lock screen interface, and a message notification bar of the electronic device. A specific position of the specified position is not limited in this embodiment of this application.

In addition, after the electronic device displays the combined card or adjusts the combined card, the user may not want to retain the combined card.

In this case, the user may perform a cancel operation on the electronic device. In this case, the electronic device may not save the combined card in response to the cancel operation.

Subsequently, the electronic device may return to the first interface, or the electronic device may jump to a specified interface. The specified interface may be set according to an actual requirement. For example, the specified interface may be the home screen of the electronic device.

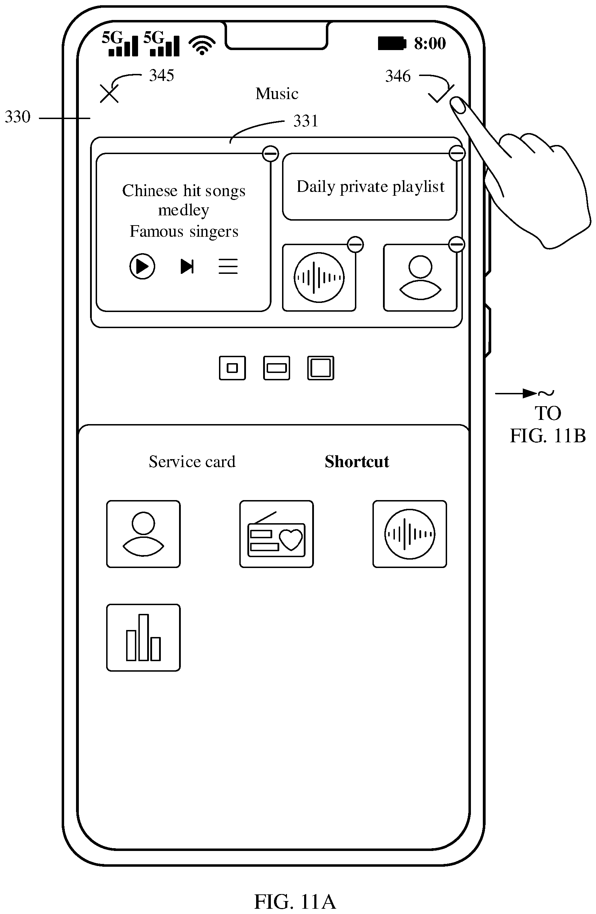

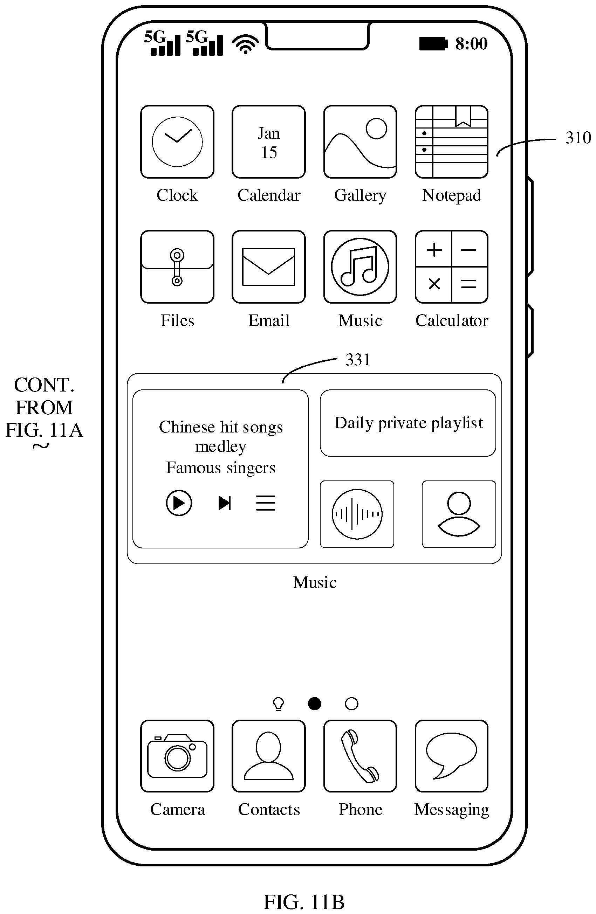

For example, in an example, as shown in FIG. 11A and FIG. 11B, the card editing interface 330 displays a "×" control 345 and a "√" control 346.

After the user completes an editing operation on the combined card 331, if the user wants to save the combined card 331, the user may tap the control 346.

In this case, the electronic device may save a current card style of the combined card 331 in response to the tap operation of the user on the control 346, jump to the home screen 310, and display the combined card 331 in a blank area of the home screen 310.

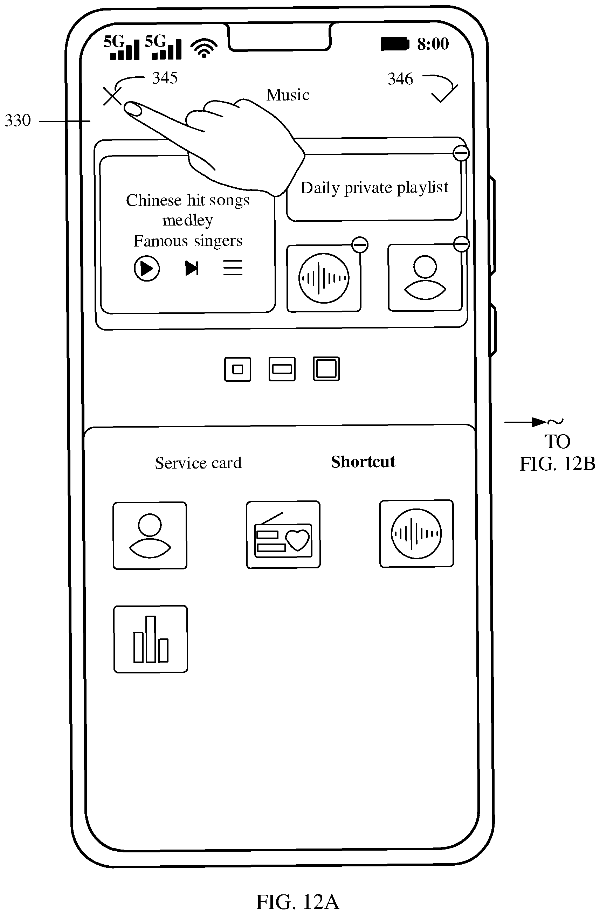

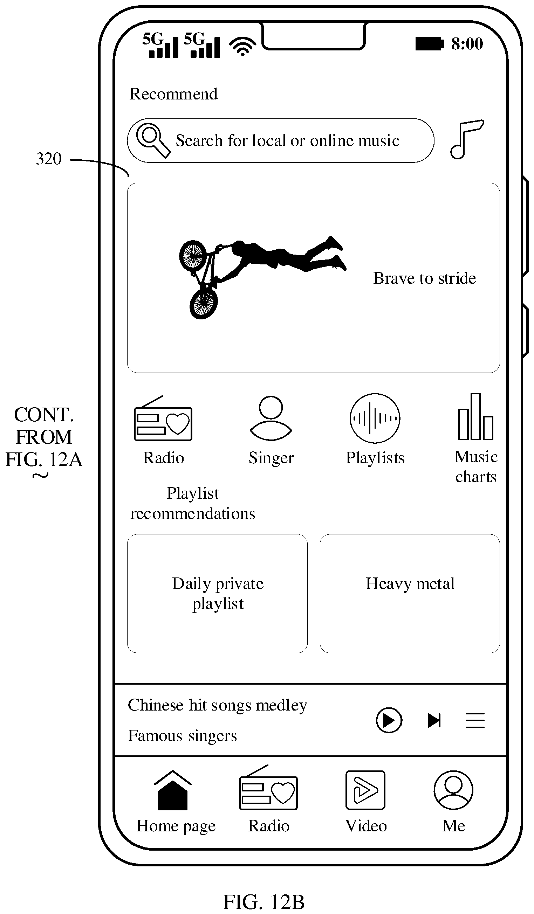

In another example, as shown in FIG. 12A and FIG. 12B, after viewing the combined card 331, the user does not want to save the combined card 331, and taps the control 345.

In this case, the electronic device may return to the home page 320 of the "Music" application in response to the tap operation of the user on the control 345, without retaining the combined card 331.

It can be learned from the foregoing examples that after the electronic device generates the combined card, the user may determine whether to save the combined card, to improve card management flexibility.

In some other embodiments, after detecting the first operation, the electronic device may display selectable card elements to the user in response to the first operation.

The selectable card elements may include a card element corresponding to the first application, or may include only a card element corresponding to the first interface.

Subsequently, the user may select, from the selectable card elements according to an actual use requirement, a card element for forming a combined card.

The electronic device may generate a corresponding combined card based on the card element selected by the user.

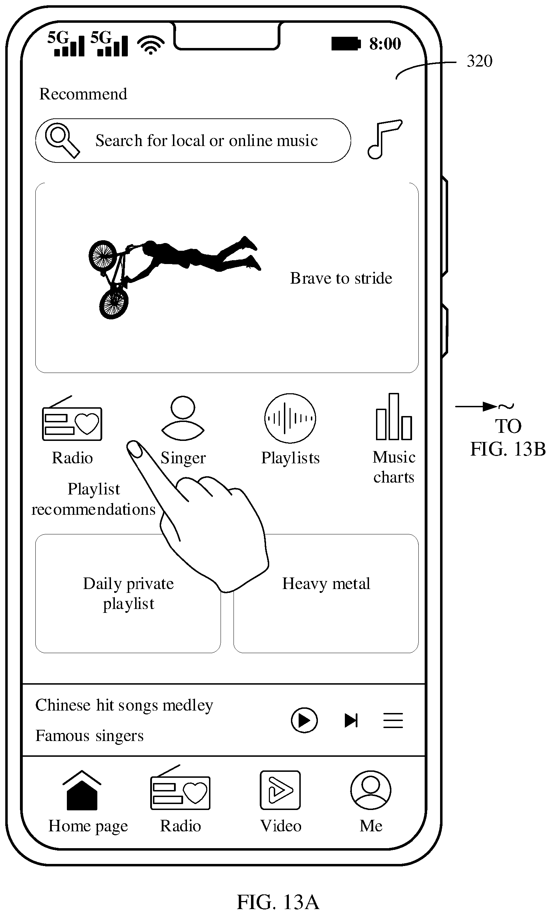

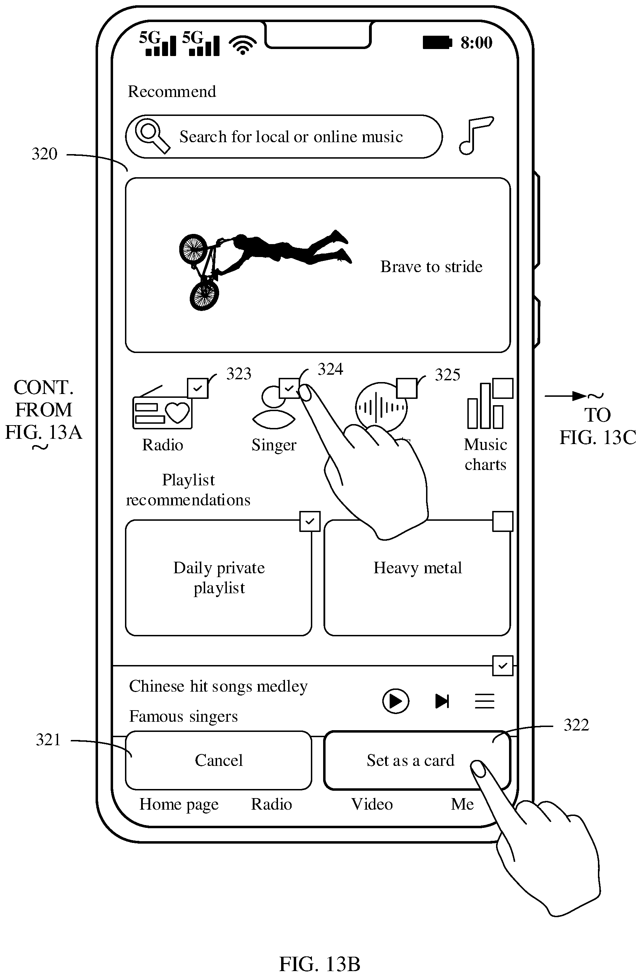

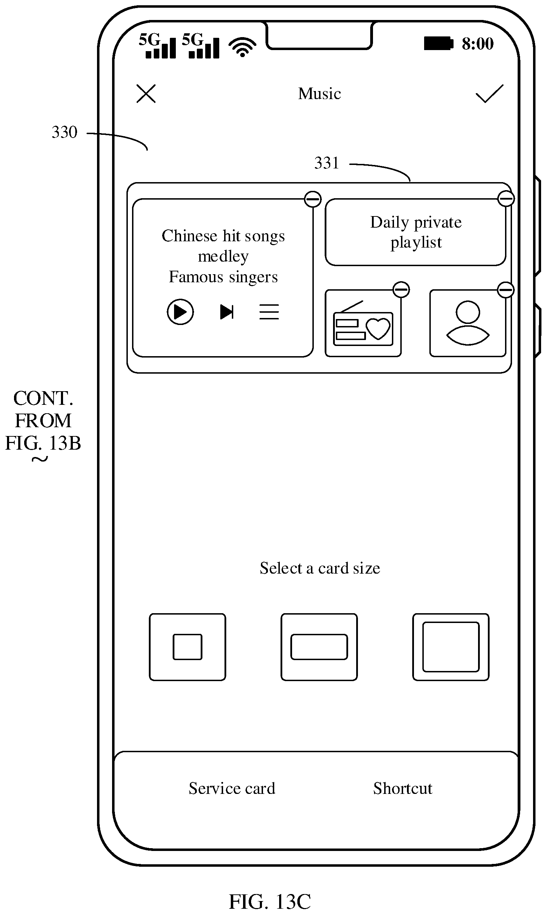

For example, as shown in FIG. 13A to FIG. 13C, after the user performs the first operation (a touch and hold operation) on the first interface (for example, the home page 320), in response to the first operation, the electronic device may display a corresponding selection control in the upper right corner of each selectable card element included in the first interface, for example, a selection control 323, a selection control 324, and a selection control 325 shown in FIG. 13A to FIG. 13C.

Then, the user may perform a tap operation on a selection control, to select a corresponding card element. For example, the user may tap the selection control 323 and the selection control 324, and select card elements corresponding to the selection control 323 and the selection control 324.

The electronic device may determine the selected card elements in response to the tap operations of the user on the selection controls.

After selecting the card elements for forming the combined card, the user may tap the "Set as a card" control 322. In this case, the electronic device may enter the card editing interface 330, and display the combined card 331 corresponding to the "Music" application in the card editing interface 330.

The combined card 331 is generated by the electronic device based on the selected card elements.

Subsequently, the user may further edit the combined card 331 in the card editing interface 330 by using the editing method described in the foregoing embodiments, to obtain the combined card 331 that meets an actual requirement of the user.

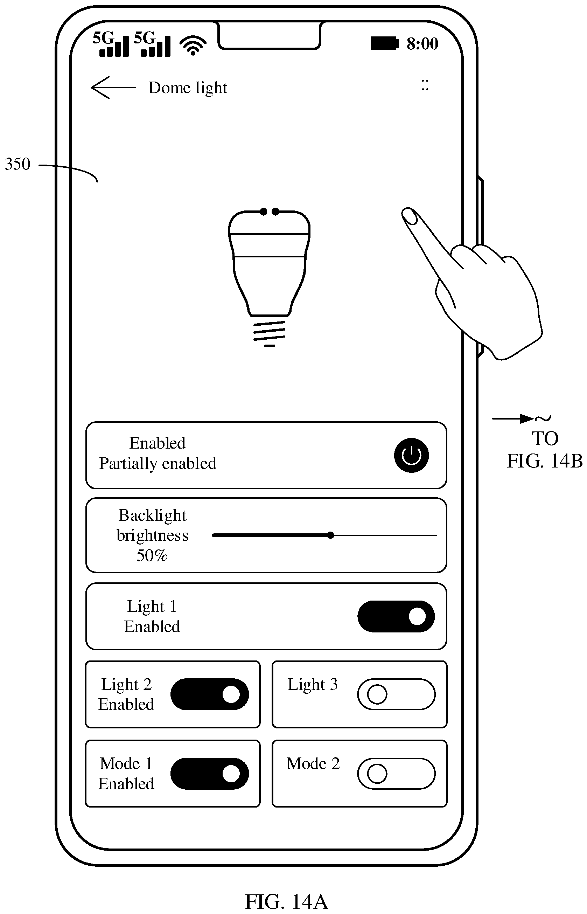

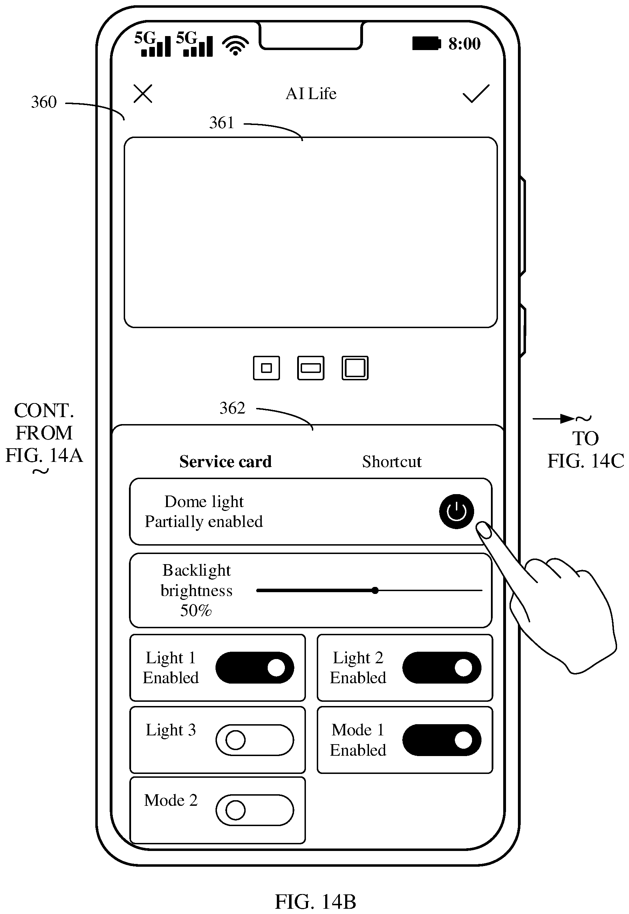

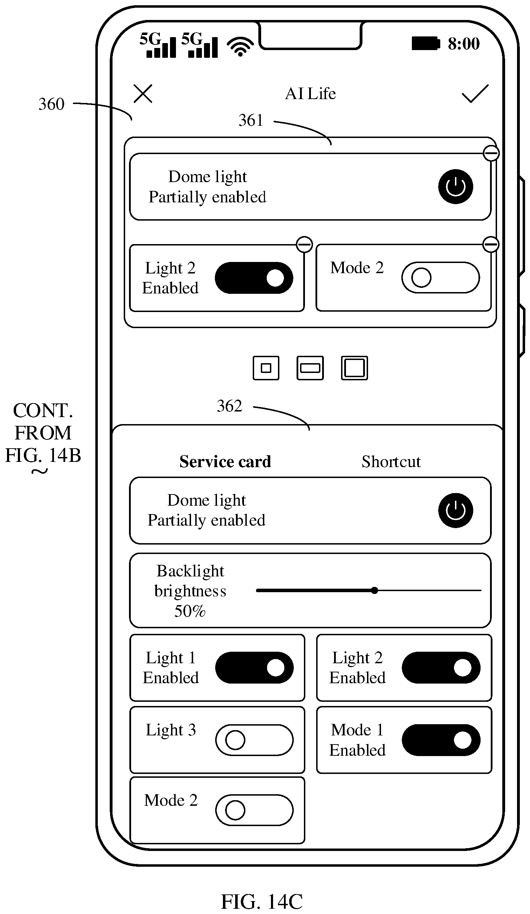

In another example, as shown in FIG. 14A to FIG. 14C, assuming that the user wants to generate a service card related to an "AI Life" application, the user may perform the first operation on a first interface of the "AI Life" application. For example, the user may perform a touch and hold operation on a control interface 350.

After detecting the first operation, the electronic device may enter a card editing interface 360 of the combined card, and display a blank combined card 361 and a blank material library 362 in the card editing interface 360.

The material library 362 may include a card element included in the first interface, or the material library may include all card elements corresponding to the first application.

For example, the material library 362 may include a card element included in the control interface 350, or the material library may include all card elements corresponding to the "AI Life" application.

After viewing the card editing interface 360, the user may edit the blank combined card 361 by using the editing method described in the foregoing embodiments, to obtain the combined card 361 that meets an actual requirement of the user.

According to the foregoing method, when detecting the first operation, the electronic device may present selectable card elements to the user. Subsequently, the user may construct a combined card based on the selectable card elements, to obtain a combined card that meets an actual use requirement of the user.

### 1.2. Create a combined card on a search interface.

In some embodiments, after detecting a search word entered by the user in a search box, the electronic device may perform a search operation based on the search word, to determine a search result. The search result includes one or more applications and/or functions.

Then, the electronic device may create, based on the search result, a combined card related to the search result.

A position of the search box may be set according to an actual requirement. For example, in some embodiments, the search box may be located on a leftmost screen. In some other embodiments, the search box may be located on a preset smart search interface. In some other embodiments, the search box may alternatively be located in another position. A specific position of the search box is not limited in this embodiment of this application.

Specifically, in some embodiments, after determining the search result, the electronic device may automatically create, based on a card element corresponding to the search result, a combined card related to the search result and display the combined card.

In some other embodiments, after determining the search result, the electronic device may display the search result.

After viewing the search result, the user may perform a selection operation on the search result.

In this case, the electronic device may determine a second application in response to the selection operation.

Then, the electronic device may enter an editing interface of the combined card, and present the to-be-edited combined card and a material library to the user. The material library may include a card element corresponding to the second application.

After viewing the card editing interface, the user may edit the combined card in an editing manner described in any one of the foregoing embodiments, to obtain a combined card that meets an actual requirement of the user.

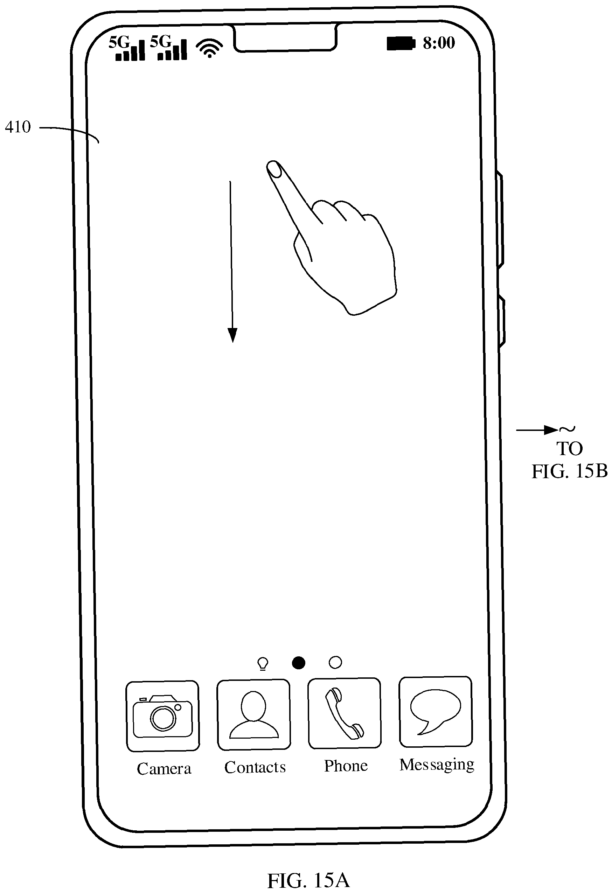

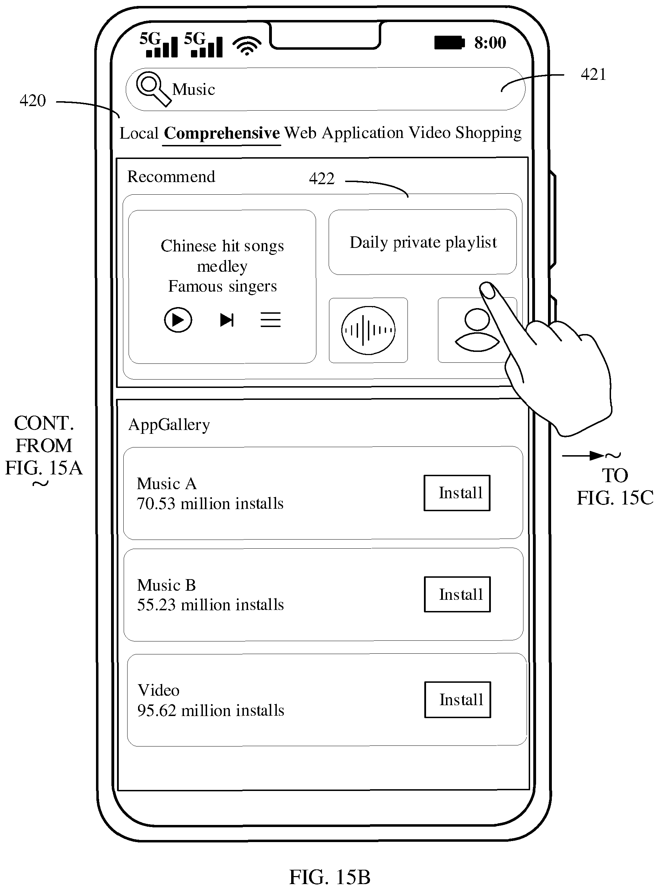

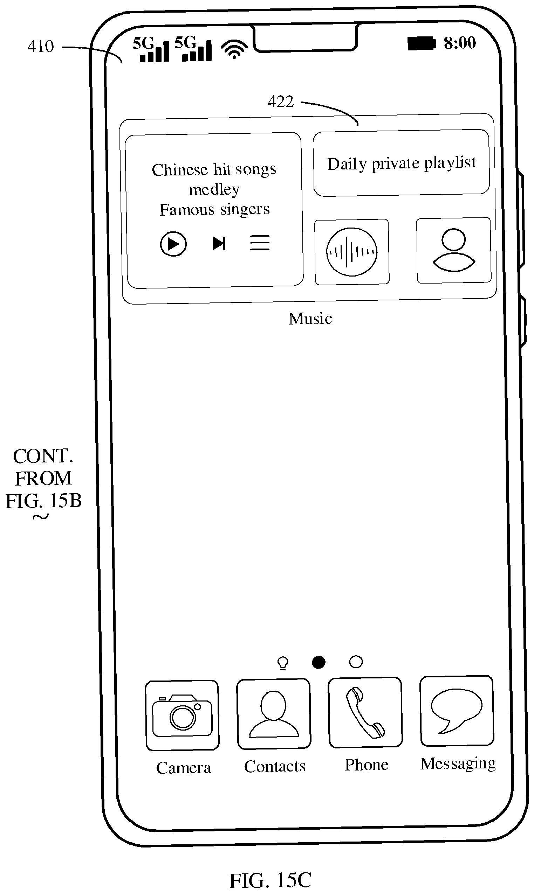

For example, as shown in FIG. 15A to FIG. 15C, the user wants to search for an application related to "Music". Therefore, the user performs a downward swipe operation on a home screen 410.

The electronic device may display a smart search interface 420 in response to the downward swipe operation, and the smart search interface 420 includes a search box 421.

After viewing the smart search interface 420, the user enters a search word "Music" in the search box 421.

In this case, the electronic device may obtain the search word "Music" in response to the enter operation, and perform a search operation based on the search word "Music", to determine a search result. For example, when performing the search operation by using the search word "Music", the electronic device may find a "Music A" application, a "Music B" application, and a "Video" application.

After determining the search result, the electronic device may obtain a card element corresponding to the search result, create a combined card 422 based on the card element corresponding to the search result, and display the combined card 422 in the smart search interface 420.

After the user views the combined card 422, if the user wants to save the combined card 422, the user may perform a saving operation on the combined card 422. For example, the user may tap the combined card 422.

In this case, in response to the saving operation of the user, the electronic device may save the combined card 422, return to the home screen 410, and display the combined card 422 on the home screen 410.

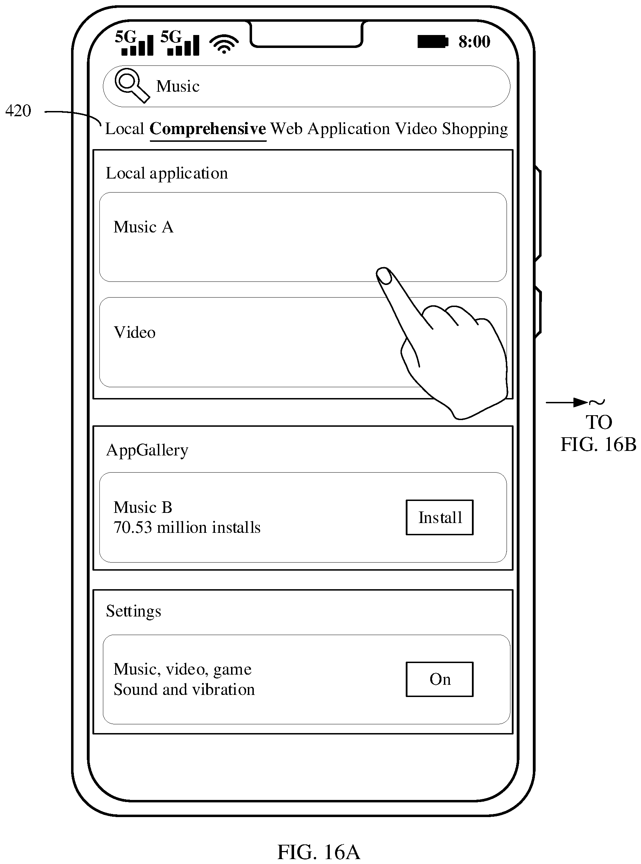

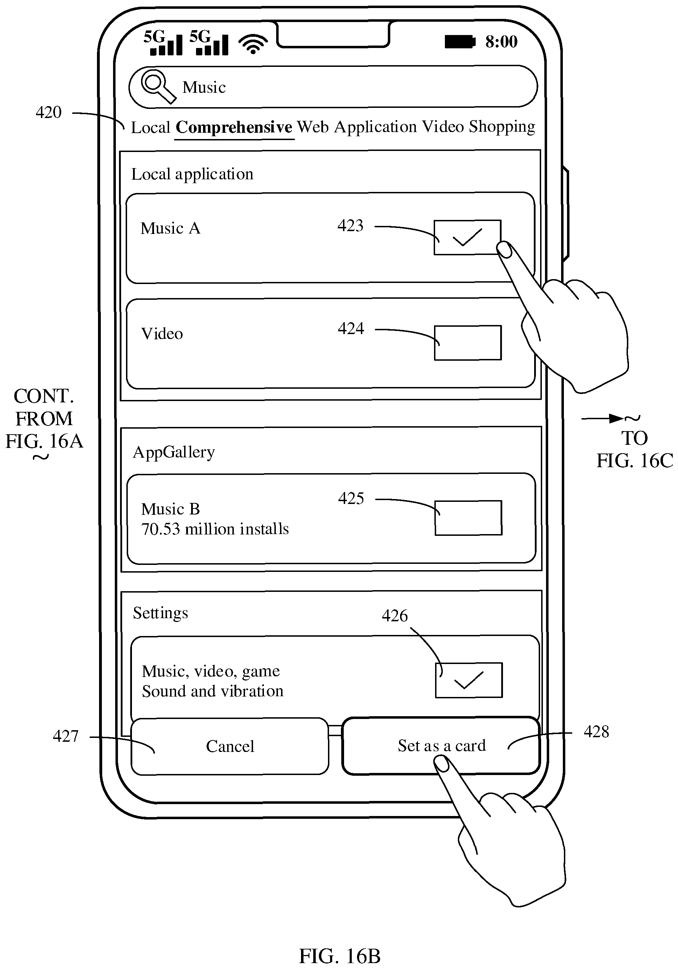

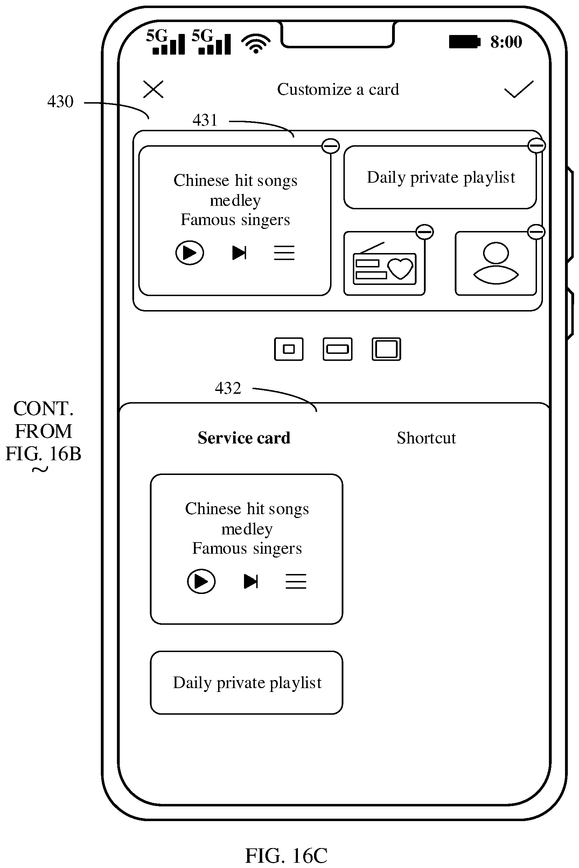

In another example, as shown in FIG. 16A to FIG. 16C, after obtaining the search word, the electronic device may display a search result on the smart search interface 420.

After viewing the search result, if the user wants to create a combined card, the user may perform a trigger operation on the search result. For example, the user may perform a touch and hold operation on the smart search interface 420.

After detecting the trigger operation, the electronic device may display a selection control corresponding to each search result. For example, the electronic device may display a selection control 423, a selection control 424, a selection control 425, and a selection control 426, and the electronic device may further display a "Cancel" control 427 and a "Set as a card" control 428.

Subsequently, after tapping the selection control 423 and the selection control 426, the user taps the "Set as a card" control 428.

In this case, in response to the operation of the user, the electronic device may determine the "Music A" application corresponding to the selection control 423 and a "Settings" application as second applications, enter a card editing interface 430, and display a to-be-edited combined card 431 and a material library 432 in the card editing interface 430.

The combined card 431 may be a blank card, or the combined card 431 may include card elements corresponding to one or more second applications.

The material library 432 may include all card elements corresponding to the second application, that is, a card element corresponding to the "Music A" application and a card element corresponding to a "Music, video, or game" function in the "Settings" application.

After viewing the card editing interface 430, the user may edit the combined card 431 by using the editing method described in the foregoing embodiments, to obtain the combined card 431 that meets an actual requirement of the user.

### 1.3. Create a combined card in a service center.

In some embodiments, the electronic device may also set an entry for creating a combined card in the service center.

When the user wants to create a new combined card, the user may perform a creation operation in the service center of the electronic device.

In this case, in response to the creation operation, the electronic device may enter a card editing interface and present a to-be-edited combined card and a material library to the user. The material library may include all card elements set on the electronic device.

After viewing the card editing interface, the user may edit the combined card in an editing manner described in any one of the foregoing embodiments, to obtain a combined card that meets an actual requirement of the user.

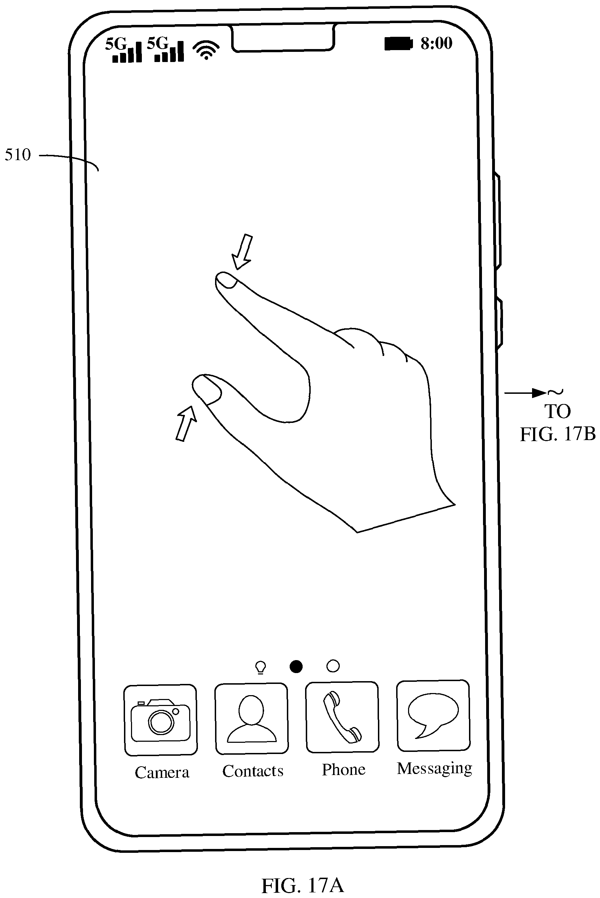

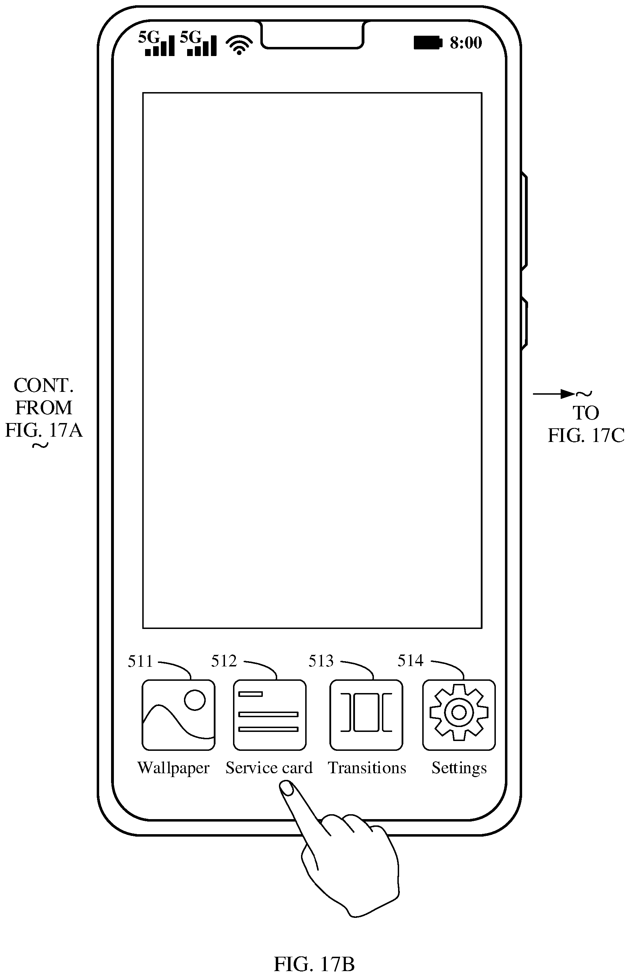

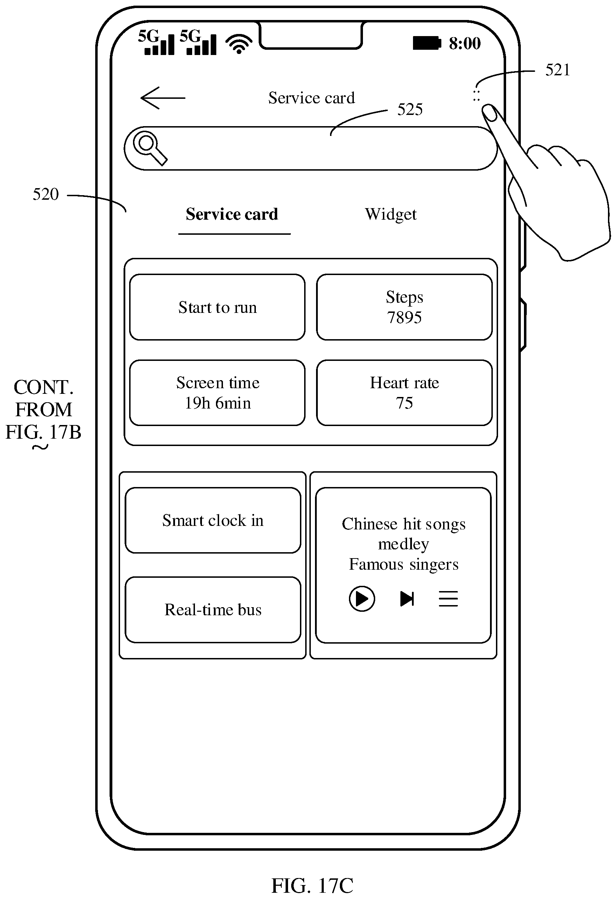

For example, as shown in FIG. 17A to FIG. 17C, when the user wants to create a new combined card, the user may pinch with two fingers on a home screen 510 of the electronic device.

In this case, in response to the pinch operation, the electronic device may display home screen management controls, including a "Wallpaper" control 511, a "Service card" control 512, a "Transitions" control 513, and a "Settings" control 514.

After viewing the home screen management controls, the user may tap the "Service card" control 512. The electronic device may enter a service center 520 in response to the tap operation, and the service center 520 displays a control 521.

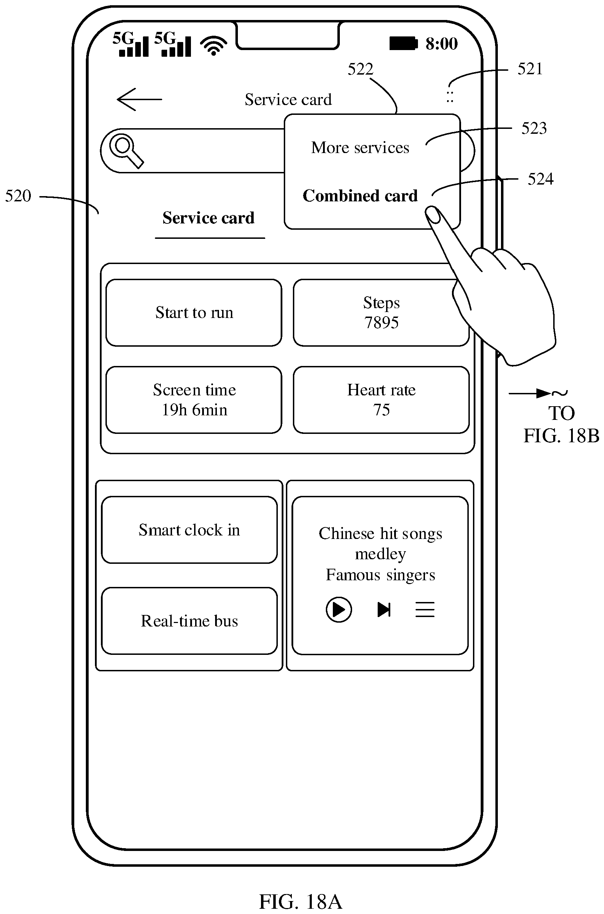

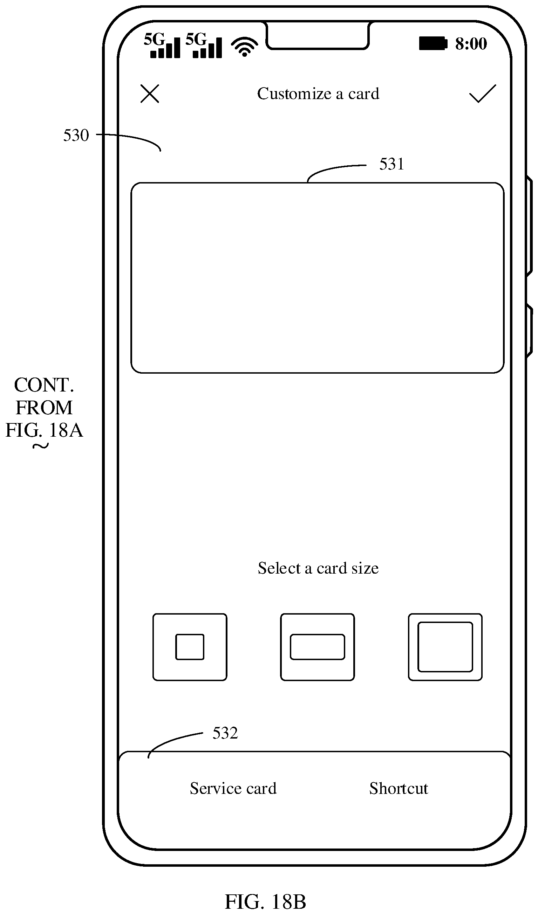

Then, the user may tap the control 521. As shown in FIG. 18A and FIG. 18B, the electronic device may display a service window 522 in response to the tap operation of the user on the control 521.

A "More services" control 523 and a "Combined card" control 524 are displayed in the service window 522.

After viewing the service window 522, the user may tap the "Combined card" control 524. In this case, the electronic device may enter a card editing interface 530 in response to the tap operation of the user.

The card editing interface 530 displays a blank combined card 531 and a material library 532. The material library 532 may include all card elements set on the electronic device.

After viewing the card editing interface 530, the user may edit the combined card 531 by using the editing method described in the foregoing embodiments, to obtain the combined card 531 that meets an actual requirement of the user.

In another example, as shown in FIG. 17A to FIG. 17C, the service center 520 further includes a search box 525. In this case, if the user enters a search word in the search box 525 before tapping the "Combined card" control 524, the material library 532 may display only a card element related to the search word. The card element related to the search word may include a service card and/or shortcut corresponding to an application/a function related to the search word.

For example, assuming that the user enters a search word "Sport" in the search box 525, the material library 532 subsequently displayed by the electronic device in the card editing interface 530 may include only a card element related to the search word "Sport".

In another example, if the user enters a search word in the search box 525, the electronic device may also search based on the search word, determine a card element related to the search word, and automatically create a corresponding combined card based on the card element related to the search word.

For example, assuming that the user enters the search word "Sport" in the search box 525, the electronic device may search for a card element related to the search word "Sport", and automatically create, based on the card element related to the search word "Sport", a combined card related to the search word "Sport".

In conclusion, in the card management method provided in this application, the user may create, from an entry such as an application, a search box, or a service center, a combined card that meets an actual requirement of the user, to resolve a problem of low flexibility and limited application scenarios of a current service card to some extent.

### 2. Edit a created combined card.

In an actual application scenario, when a use requirement of a user changes, the user may want to re-edit a created combined card.

Therefore, in the card management method provided in this embodiment of this application, the electronic device may edit the combined card in an interface such as a home screen, a shallow editing state, or a service center in response to an operation of the user.

### 2.1. Edit a combined card on the home screen.

When the electronic device displays the combined card on the home screen, the user may edit the combined card by dragging a card element.

### Specifically, in some embodiments, when the electronic device detects that a first card element (that is, a first display element) in the combined card is dragged by the user to an area outside the combined card, the electronic device may delete the first card element in the combined card. Alternatively, in some other embodiments, the electronic device may display the first card element in an area outside the combined card.

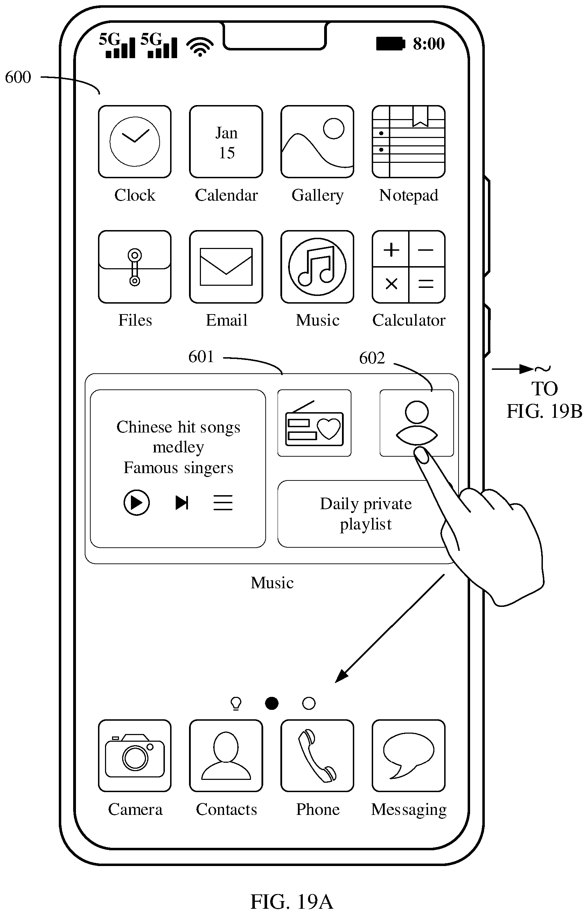

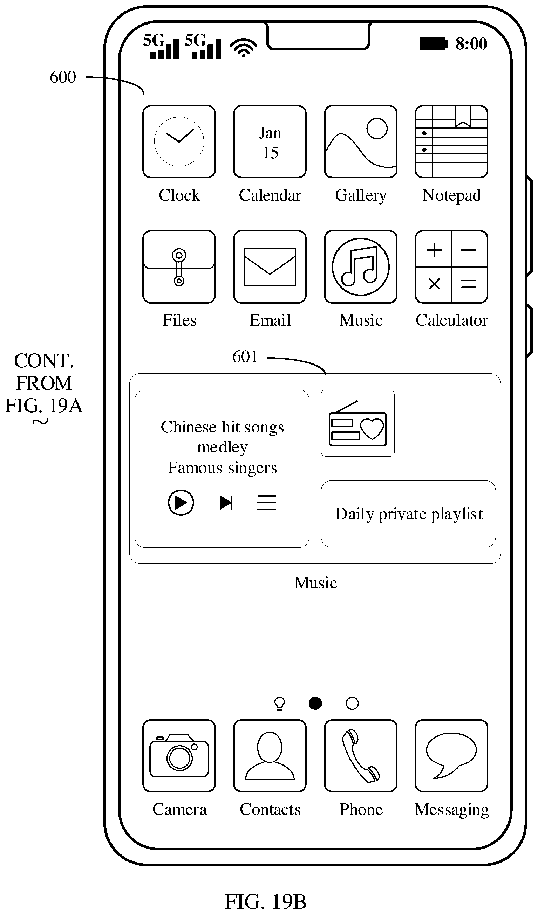

For example, as shown in FIG. 19A and FIG. 19B, a combined card 601 is displayed on a home screen 600 of the electronic device, and the combined card 601 includes a card element 602.

When the user wants to delete the card element 602 in the combined card 601, the user may drag the card element 602 to an area outside the combined card 601.

In this case, the electronic device may delete the card element 602 in the combined card 601 in response to the drag operation of the user.

Alternatively, the electronic device may display the card element 602 in an area outside the combined card 601.

In some other embodiments, when the electronic device detects that a second card element (that is, a third display element) outside the combined card is dragged by the user to a first position in the combined card, the electronic device may add the second card element in the first position in the combined card.

When adding the second card element, the electronic device may detect whether remaining space in the combined card is greater than or equal to space that needs to be occupied by the second card element.

If the remaining space in the combined card is greater than or equal to the space that needs to be occupied by the second card element, the electronic device may add the second card element to the combined card.

If the remaining space in the combined card is less than the space that needs to be occupied by the second card element, the electronic device may first increase a size of the combined card.

Then, the electronic device adds the second card element to the combined card, to ensure that the combined card has sufficient space to accommodate the second card element.

In addition, if the first position is not occupied, the electronic device may directly place the second card element in the first position.

If the first position is occupied by another card element in the combined card, the electronic device may place the second card element in the first position, and adjust a position of the another card element in the combined card in a moving squeezing manner.

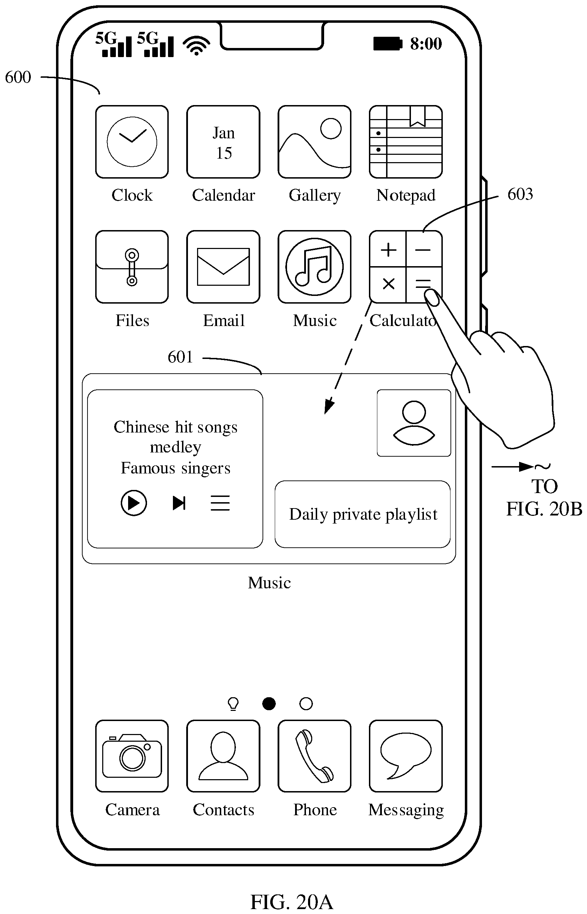

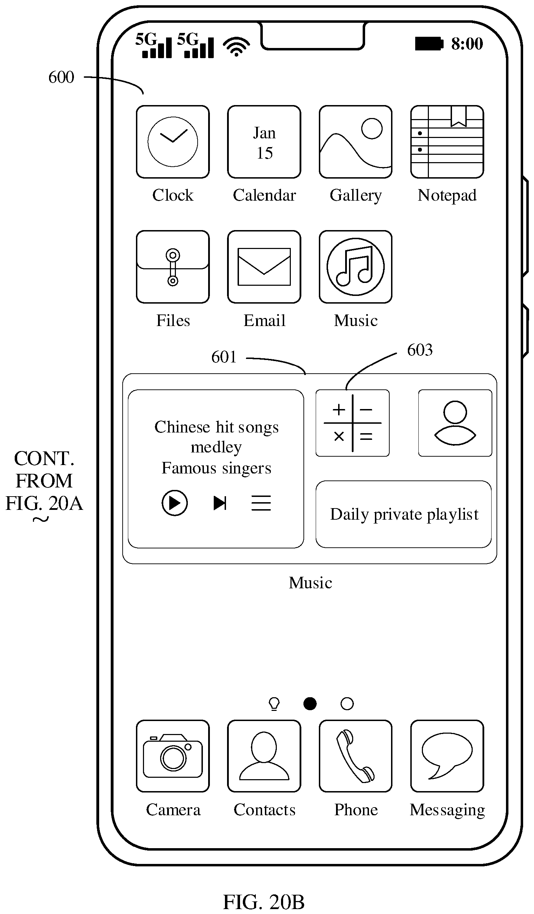

For example, as shown in FIG. 20A and FIG. 20B, the user wants to add a card element 603 to the combined card 601. Therefore, the user drags the card element 603 to a position to which a dashed line arrow points.

The card element 603 needs to occupy one grid of space, the combined card 601 has one remaining grid of space, and the combined card 601 has sufficient space to accommodate the card element 603. Therefore, the electronic device may place the card element 603 in the position to which the dashed line arrow points.

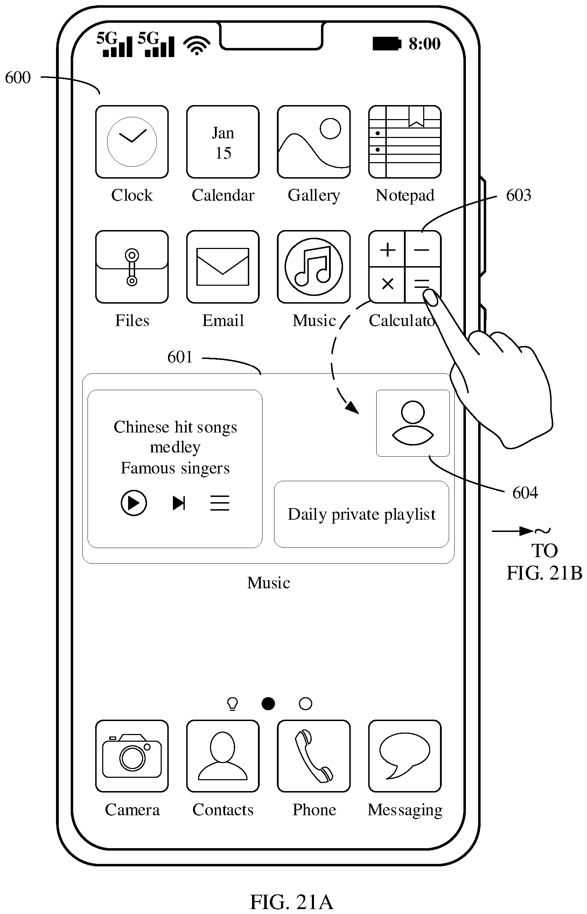

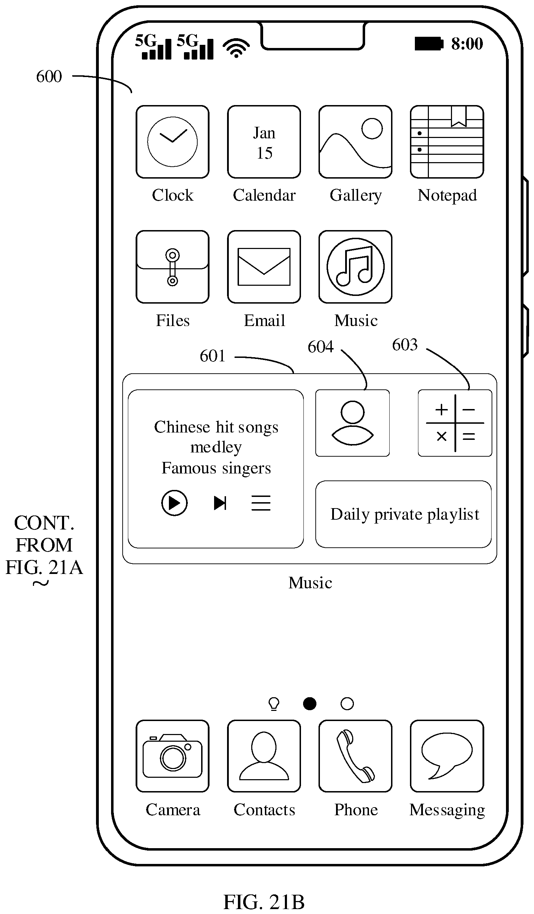

In another example, as shown in FIG. 21A and FIG. 21B, the user wants to add a card element 603 to the combined card 601. Therefore, the user drags the card element 603 to a position to which a dashed line arrow points.

The card element 603 needs to occupy one grid of space, and the combined card 601 has one remaining grid of space. Therefore, the combined card 601 has sufficient space to accommodate the card element 603.

However, because the position to which the dashed line arrow points is already occupied by a card element 604, the electronic device may place the card element 603 in the position to which the dashed line arrow points in a moving and squeezing manner, and squeeze the card element 604 to another position in the combined card 601.

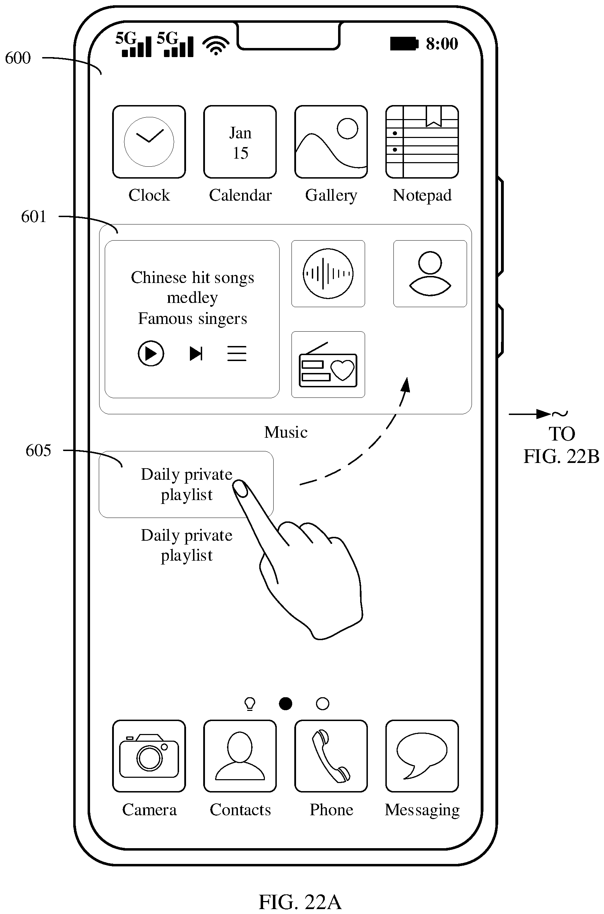

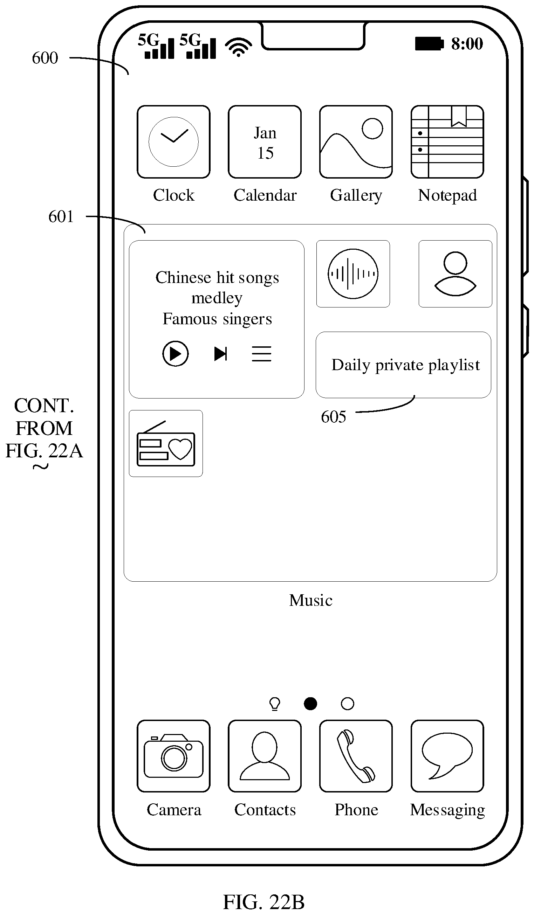

In another example, as shown in FIG. 22A and FIG. 22B, the user wants to add a card element 605 to the combined card 601. Therefore, the user drags the card element 605 to a position to which a dashed line arrow points.

The card element 605 needs to occupy two grids of space, and the combined card 601 has one remaining grid of space. Therefore, the combined card 601 has no sufficient space to accommodate the card element 605.

In this case, the electronic device may first increase a size of the combined card 601. Then, the electronic device places the card element 605 in the position to which the dashed line arrow points, and adjusts a position of another card element in the combined card 601 in a moving and squeezing manner.

According to the foregoing card management method, the user may edit the combined card on the home screen by dragging a card element, to delete a card element in the combined card and/or add a card element to the combined card. This is easy to operate and convenient to use, and can effectively improve editing efficiency of the user.

### 2.2. Edit a combined card in the shallow editing state.

When the user wants to perform deeper editing on the combined card, the user may perform a shallow editing operation on the combined card. The shallow editing operation may include any one or a combination of a plurality of operation forms such as a tap operation, a swipe operation, and a touch and hold operation.

After detecting the shallow editing operation, the electronic device may control the combined card to enter the shallow editing state.

In the shallow editing state, the user may perform operations such as deleting a card element, changing a name of the combined card, removing the combined card, and entering a card editing interface corresponding to the combined card on the combined card.

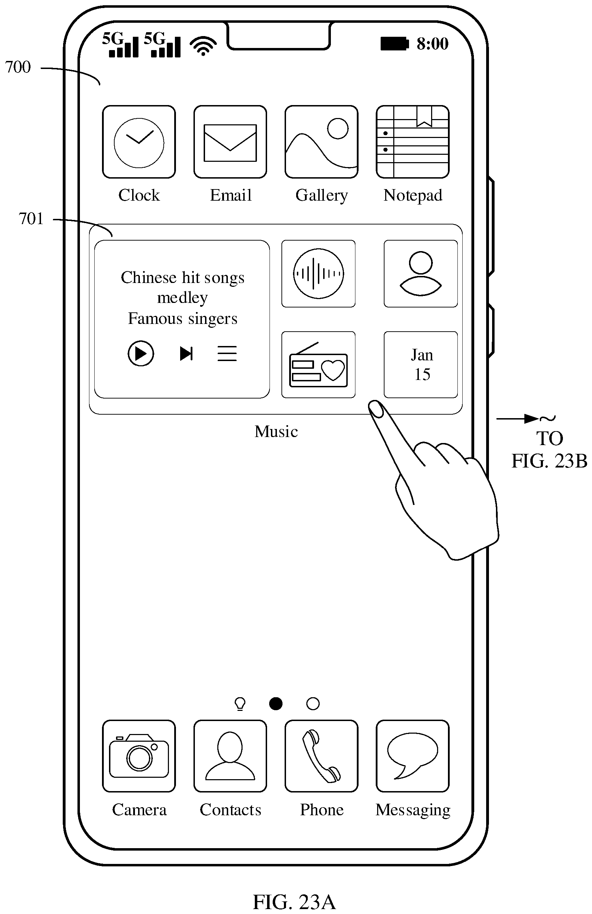

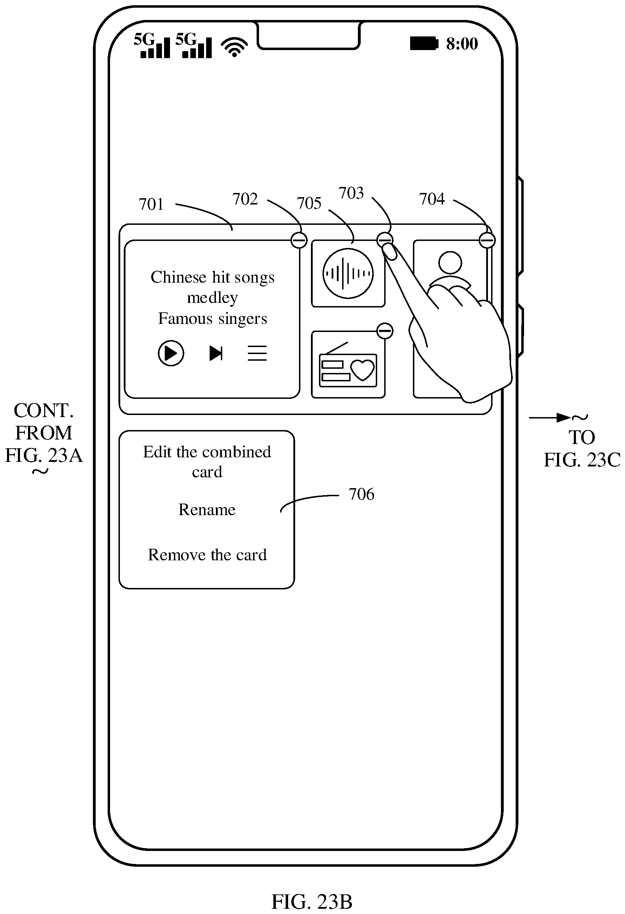

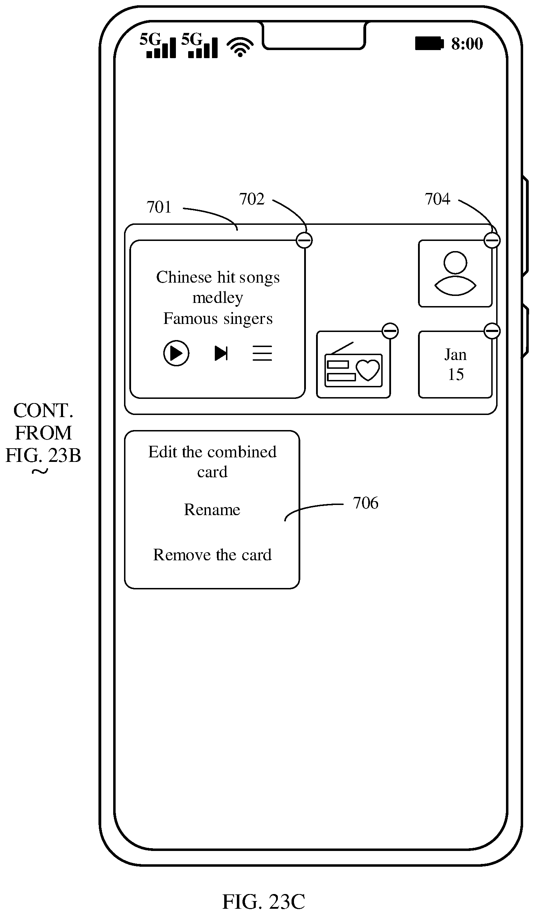

For example, as shown in FIG. 23A to FIG. 23C, a combined card 701 is displayed on a home screen 700 of the electronic device. When the user wants to control the combined card 701 to enter the shallow editing state, the user may perform a shallow editing operation (that is, a third operation) on the combined card. For example, the user may touch and hold the combined card 701.

In this case, in response to the shallow editing operation of the user, the electronic device may control the combined card 701 to enter the shallow editing state.

In the shallow editing state, the electronic device may display a delete control corresponding to each card element in the combined card 701, for example, a delete control 702, a delete control 703, and a delete control 704 shown in FIG. 23A to FIG. 23C.

Subsequently, assuming that the user wants to delete a card element 705, the user may tap the delete control 703 corresponding to the card element 705.

After detecting the tap operation of the user on the delete control 703, the electronic device may remove the card element 705 corresponding to the delete control 703.

In addition, in the shallow editing state, the electronic device may further display a card editing menu 706 corresponding to the combined card 701. The card editing menu 706 may include one or more options. For example, the card editing menu 706 may include three options: "Edit the combined card", "Rename", and "Remove the card".

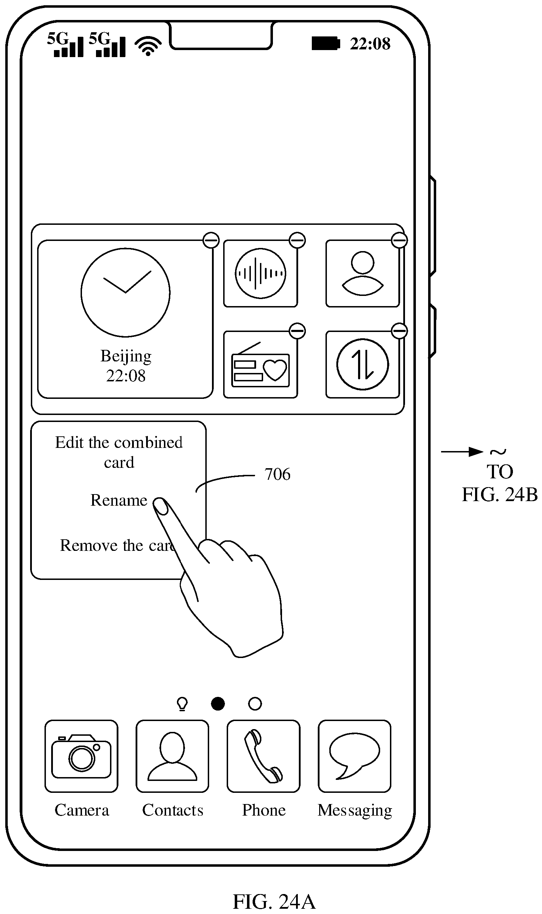

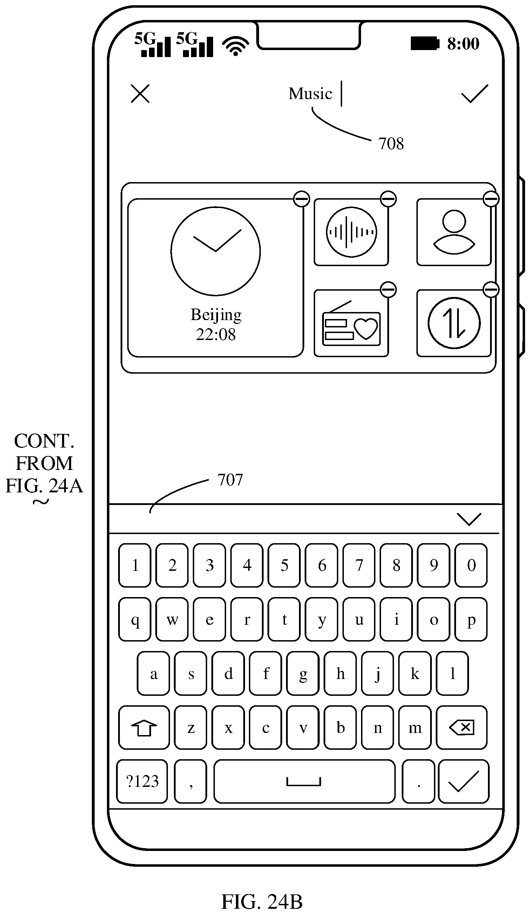

As shown in FIG. 24A and FIG. 24B, if the user wants to modify a name of the combined card 701, the user may tap the "Rename" option in the card editing menu 706.

In this case, the electronic device may display a keyboard control 707 and a name control 708 in response to the tap operation of the user.

Subsequently, the user may modify a card name in the name control 708 by using the keyboard control 707.

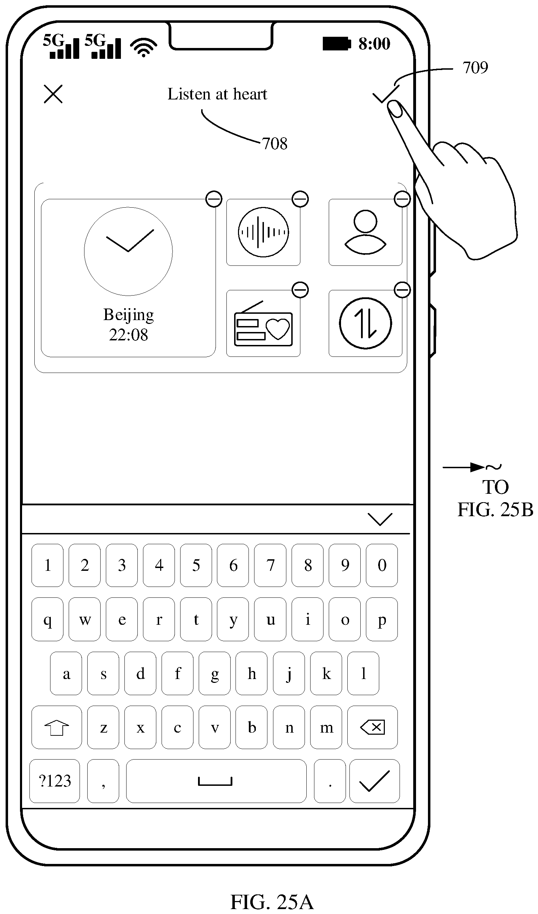

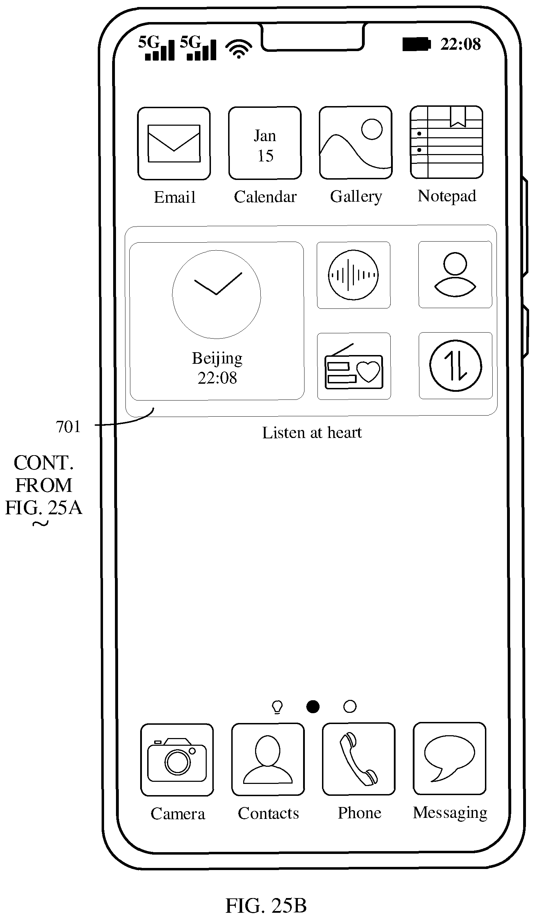

As shown in FIG. 25A and FIG. 25B, after modifying the card name in the name control 708 from "Music" to "Listen at heart", the user taps an OK control 709.

In this case, the electronic device may update the card name of the combined card 701 to "Listen at heart" in response to the tap operation of the user on the OK control 709.

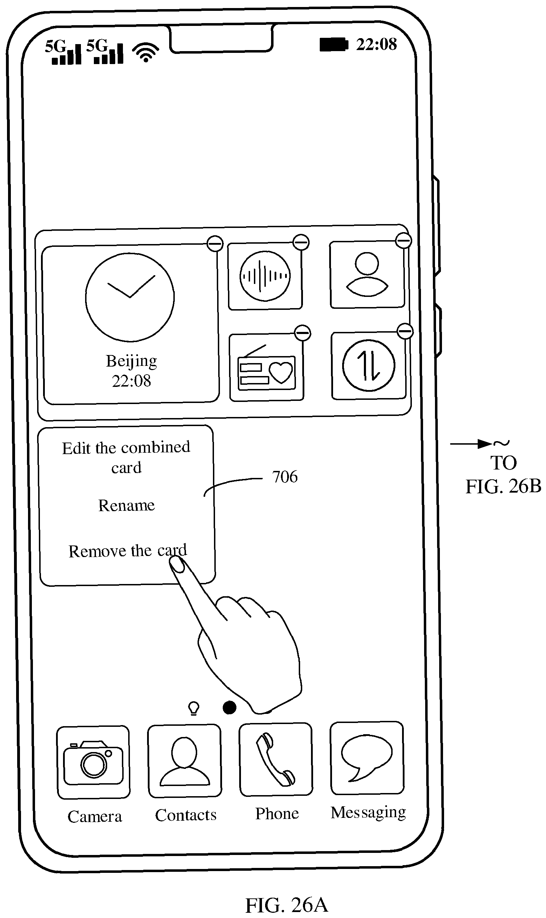

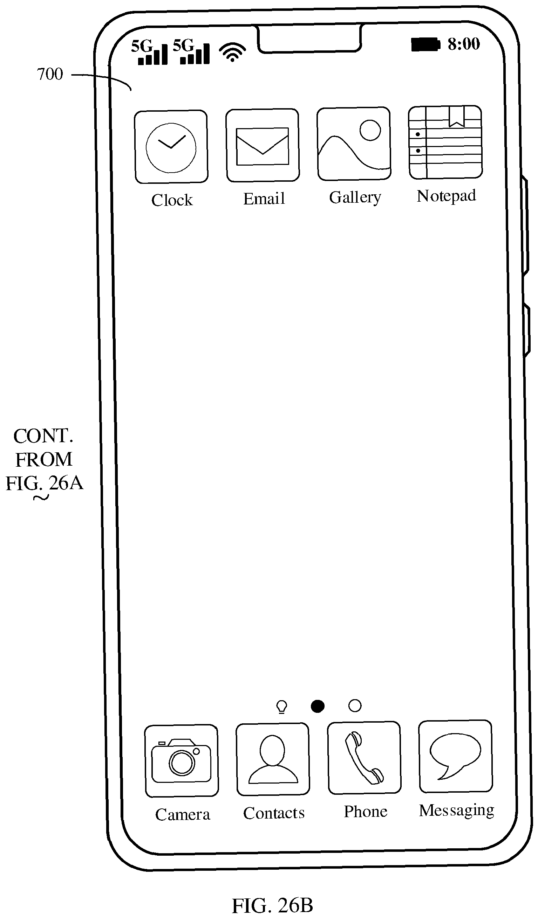

As shown in FIG. 26A and FIG. 26B, if the user wants to remove the combined card 701, the user may tap the "Remove the card" option in the card editing menu 706.

In this case, in response to the tap operation of the user on the "Remove the card" option, the electronic device may remove the combined card 701 displayed on the home screen 700.

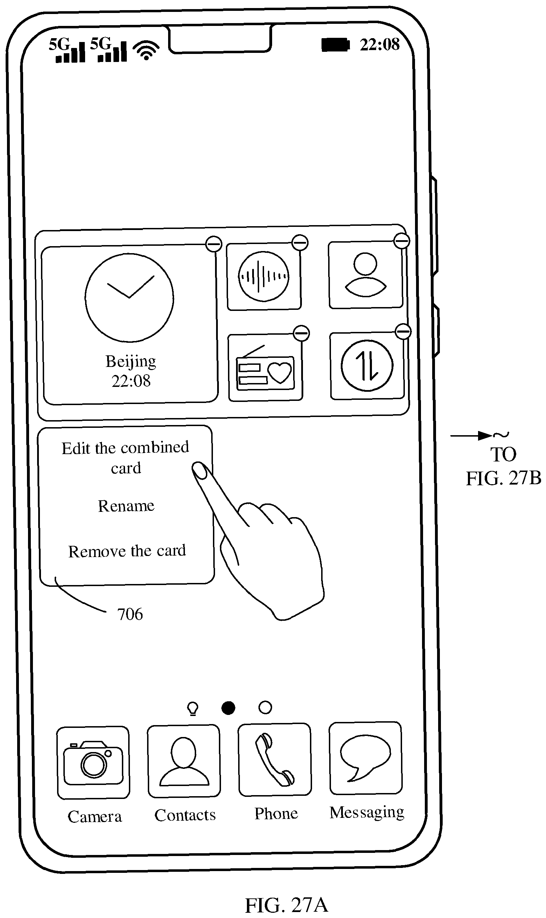

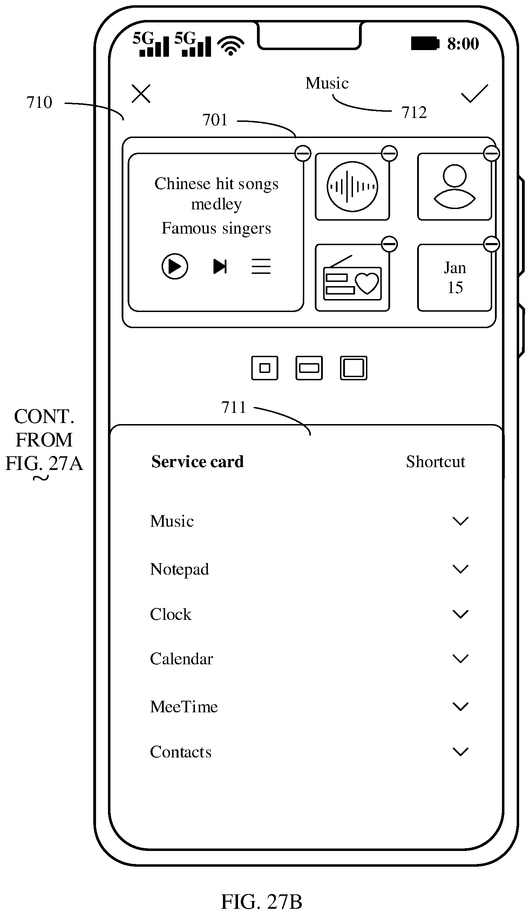

As shown in FIG. 27A and FIG. 27B, if the user wants to enter a card editing interface 710 corresponding to the combined card 701, the user may tap the "Edit the combined card" option in the card editing menu 706.

In this case, the electronic device may enter the card editing interface 710 of the combined card 701 in response to the tap operation of the user on the "Edit the combined card" option.

The card editing interface 710 displays the combined card 701, a material library 711, a name control 712, and a deletion control corresponding to each card element in the combined card 701.

The material library 711 may include all card elements set on the electronic device.

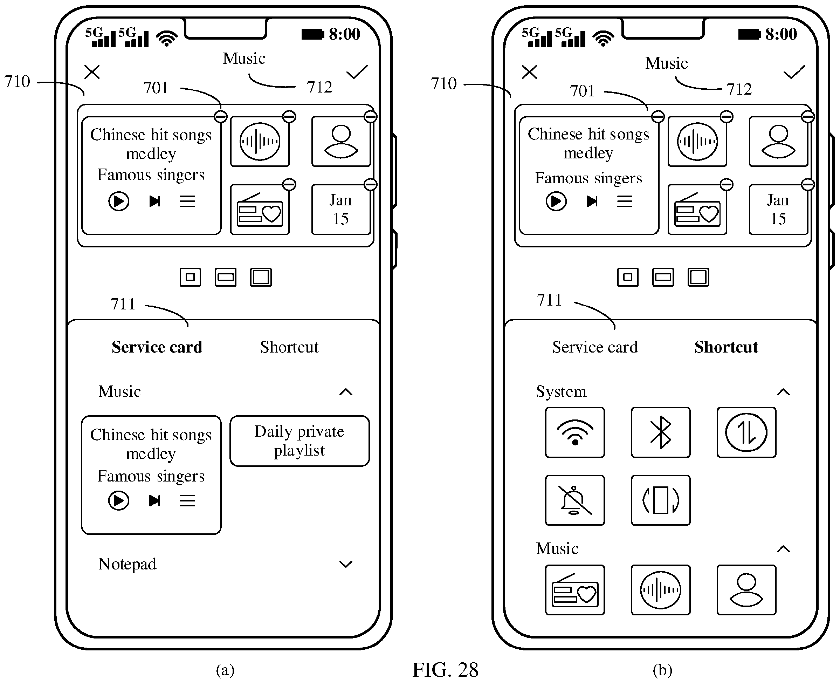

For example, as shown in FIG. 27A and FIG. 27B and a scenario in (a) in FIG. 28, the material library 711 may include service cards corresponding to applications such as a "Music" application, a "Notepad" application, and a "Clock" application.

In addition, as shown in a scenario in (b) in FIG. 28, the material library 711 may further include a shortcut corresponding to each application/function on the electronic device. The function may be a function provided by a system (for example, an "Auto-rotate" function), or may be a function in an application (for example, a "Radio" function in a "Music" application)

Subsequently, the user may delete a card element in the combined card 701, and/or add a card element in the material library 711 to the combined card 701 by using the editing method described in the foregoing embodiments.

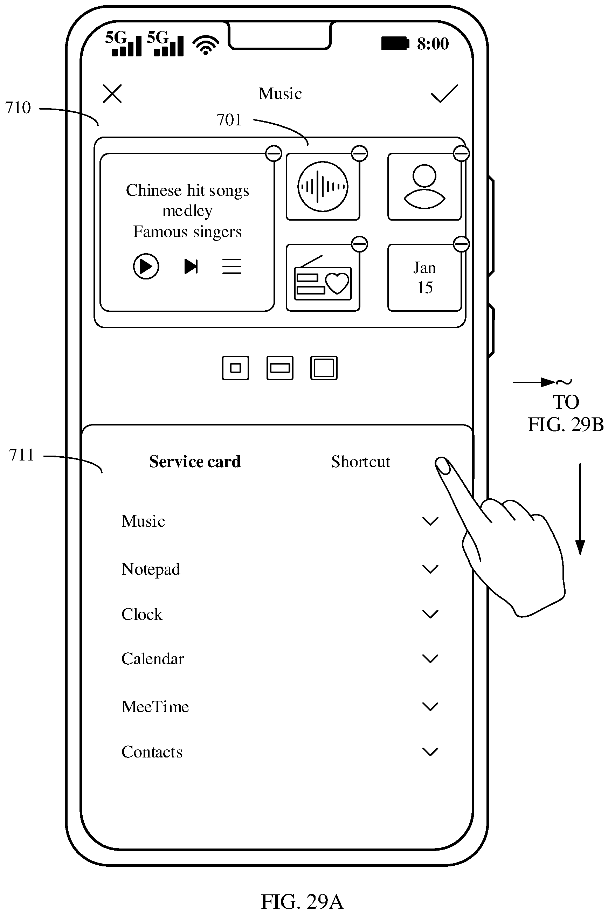

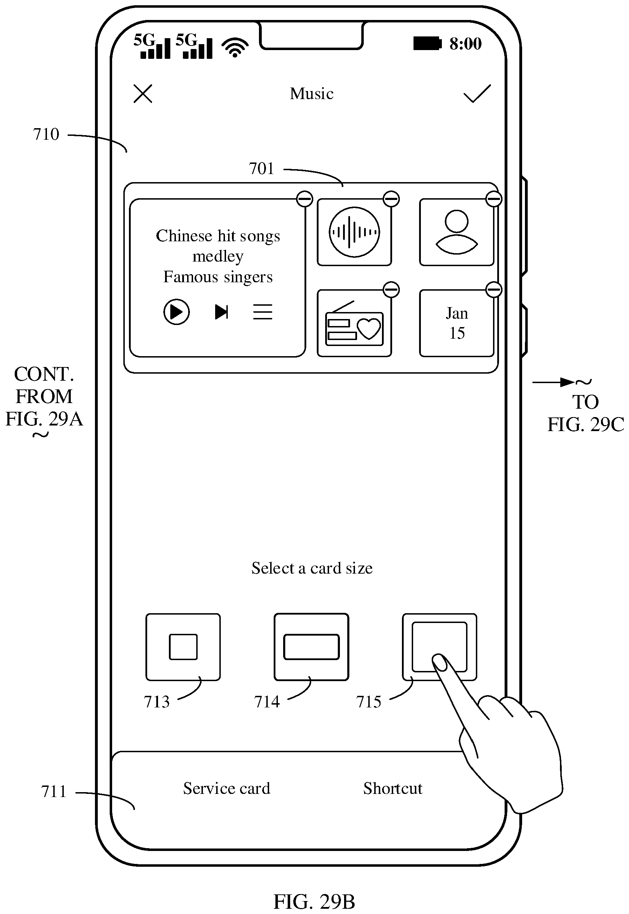

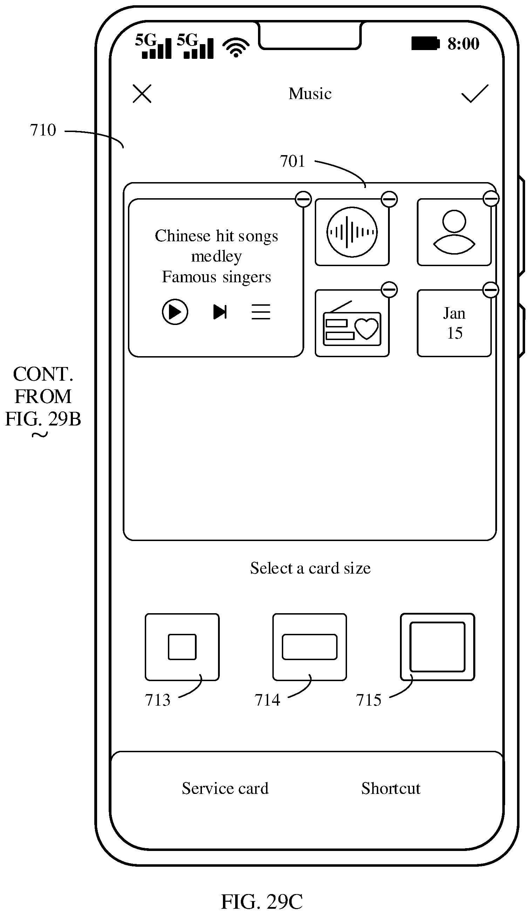

In addition, as shown in FIG. 29A to FIG. 29C, if the user wants to increase a size of the combined card 701, the user may swipe down in the material library 711.

In this case, in response to the swipe operation of the user, the electronic device may fold the material library 711 and display a size adjustment control 713, a size adjustment control 714, and a size adjustment control 715. The size adjustment control 714 corresponds to a current size of the combined card 701.

Then, the user may tap the size adjustment control 715. The electronic device may increase the size of the combined card 701 in response to the tap operation of the user on the size adjustment control 715.

Correspondingly, if the user wants to decrease the size of the combined card 701, the user may tap the size adjustment control 713. The electronic device may decrease the size of the combined card 701 in response to the tap operation of the user on the size adjustment control 713.

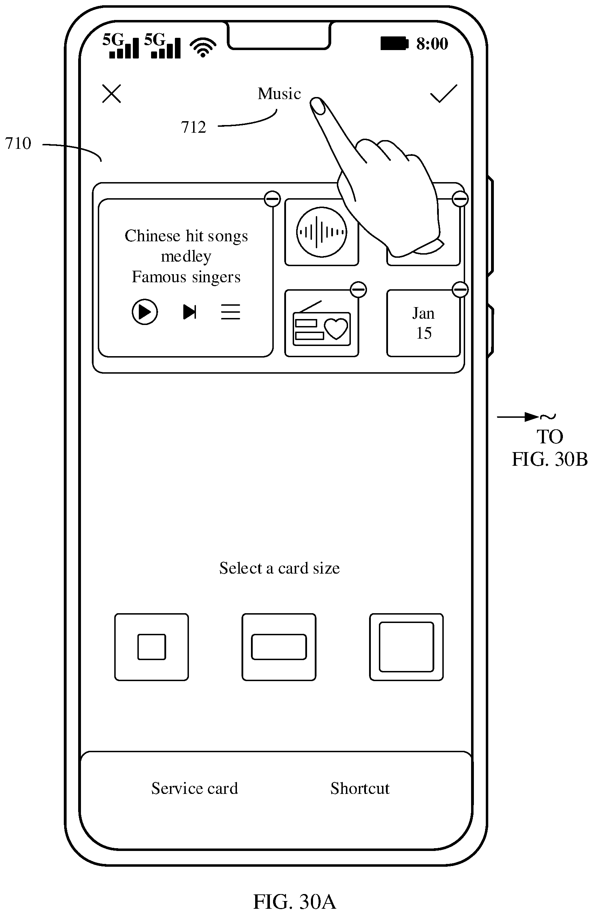

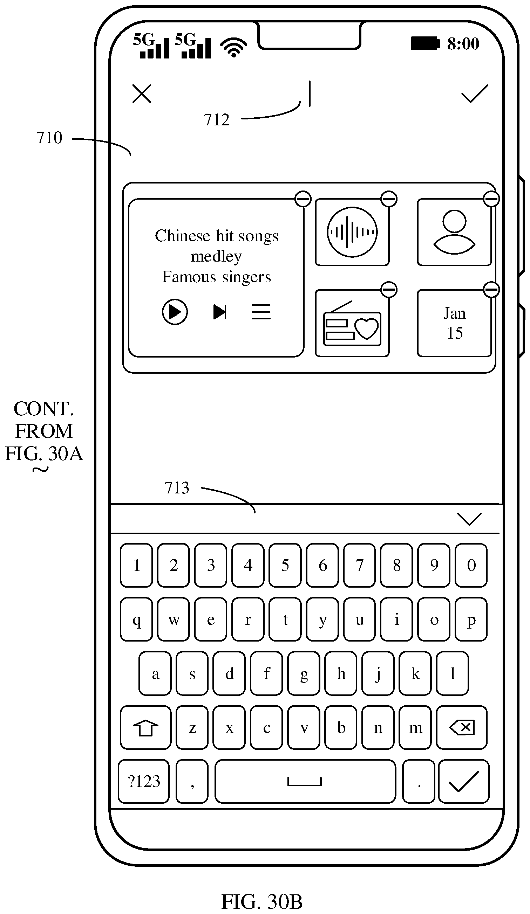

In addition, as shown in FIG. 30A and FIG. 30B, if the user wants to adjust the card name of the combined card 701, the user may also tap the name control 712 in the card editing interface 710, to wake up the keyboard 713.

Subsequently, the user may modify a card name in the name control 712 by using the keyboard control 713.

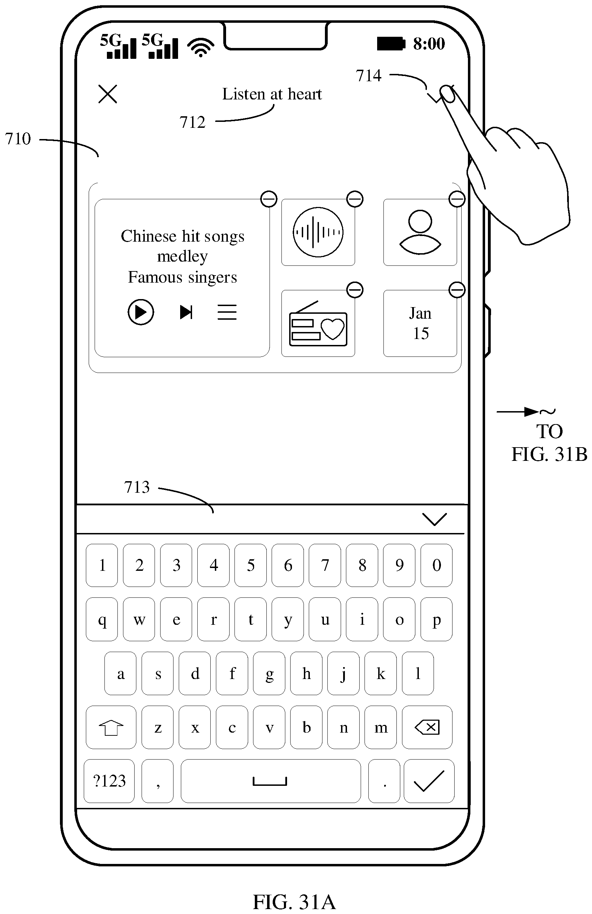

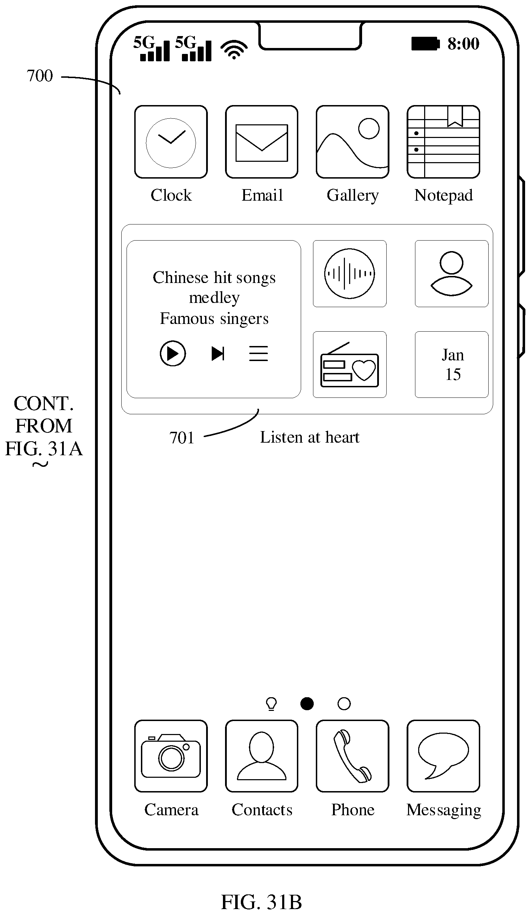

As shown in FIG. 31A and FIG. 31B, after modifying the card name in the name control 712 from "Music" to "Listen at heart", the user may tap an OK control 714.

In this case, the electronic device may modify the card name of the combined card 701 to "Listen at heart" in response to the tap operation of the user on the OK control 714.

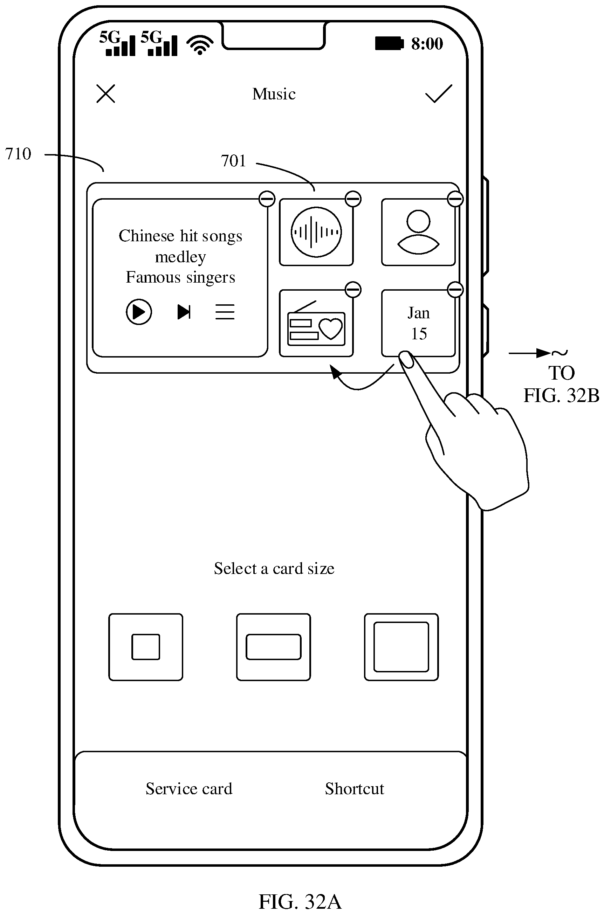

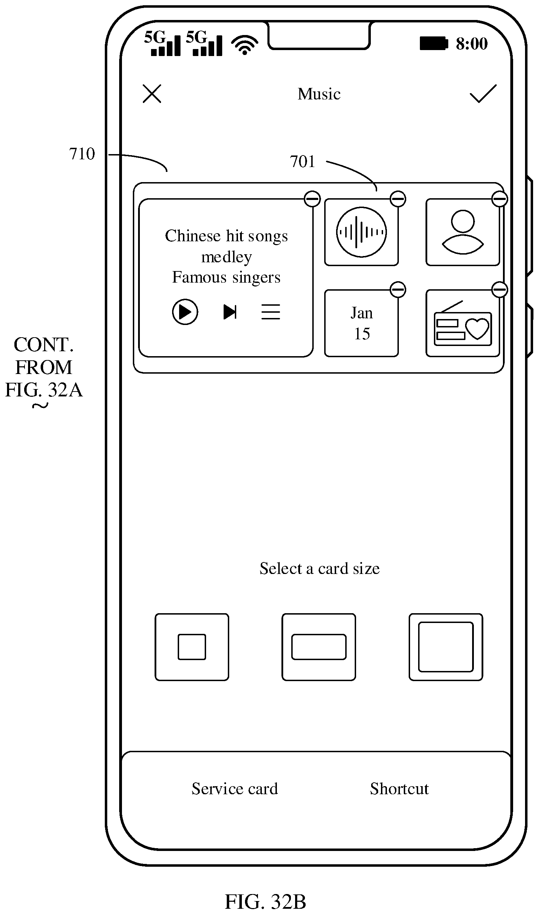

As shown in FIG. 32A and FIG. 32B, in some embodiments, the user may further adjust a position of each card element in the combined card 701 by dragging the card element in the combined card 701.

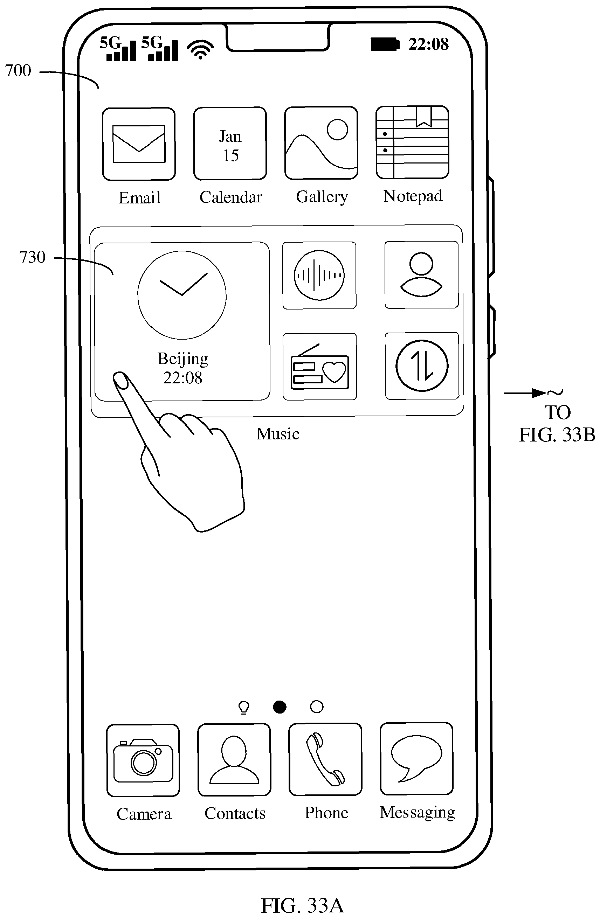

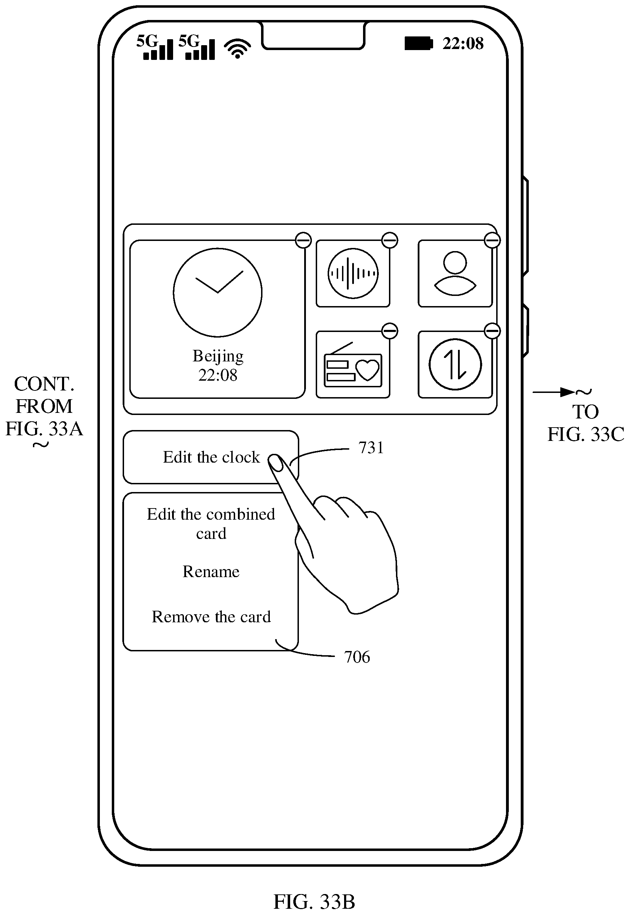

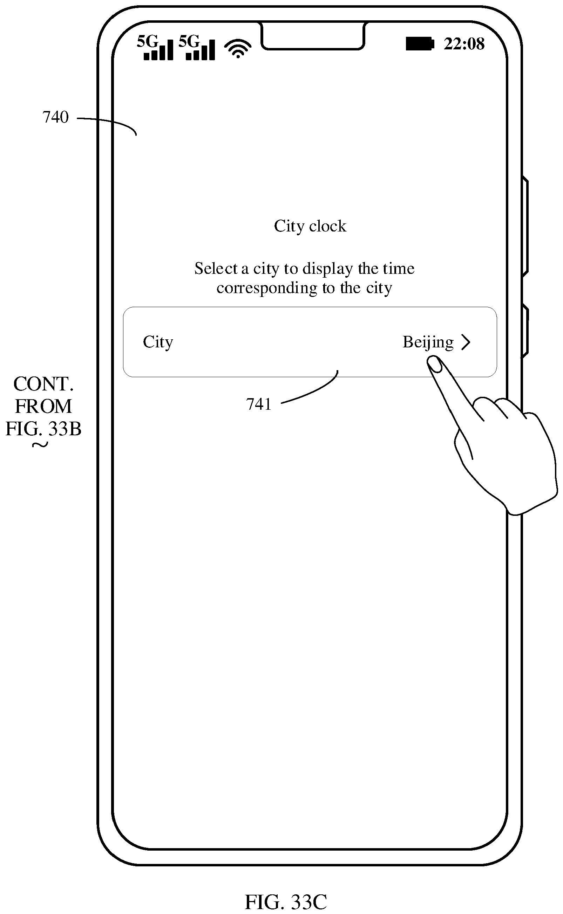

In another example, as shown in FIG. 33A to FIG. 33C, when the user touches and holds a card element (for example, a card element 730) in the combined card 701, in addition to displaying the card editing menu 706 of the combined card 701, the electronic device may further display an element editing menu 731 corresponding to the card element 730. The element editing menu 731 may be used to adjust a function of the card element 730.

For example, assuming that the user wants to edit a function of the card element 730, the user may tap an "Edit the clock" option in the element editing menu 731. In response to the tap operation of the user on the "Edit the clock" option, the electronic device may enter a clock editing interface 740 corresponding to the card element 730. A city editing option 741 is displayed in the editing interface 740.

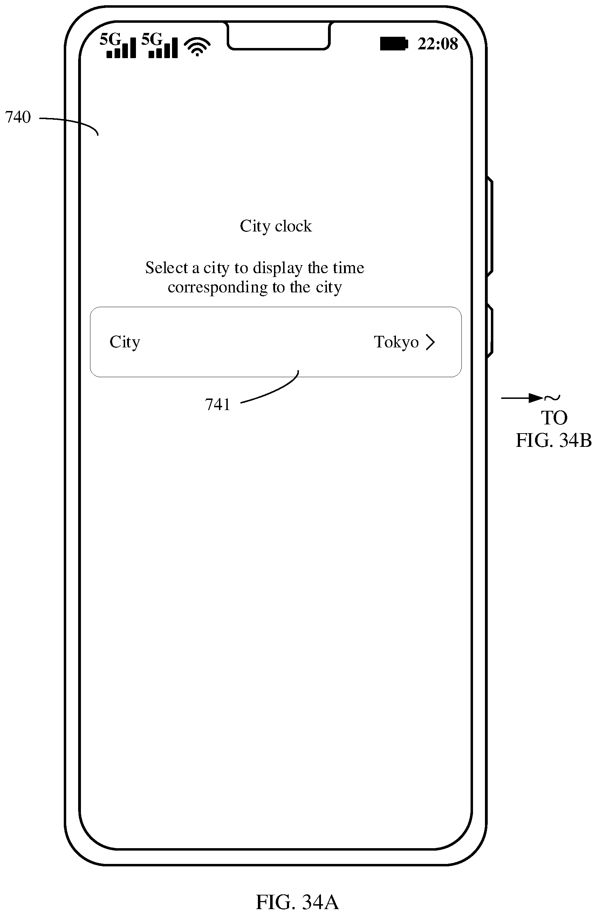

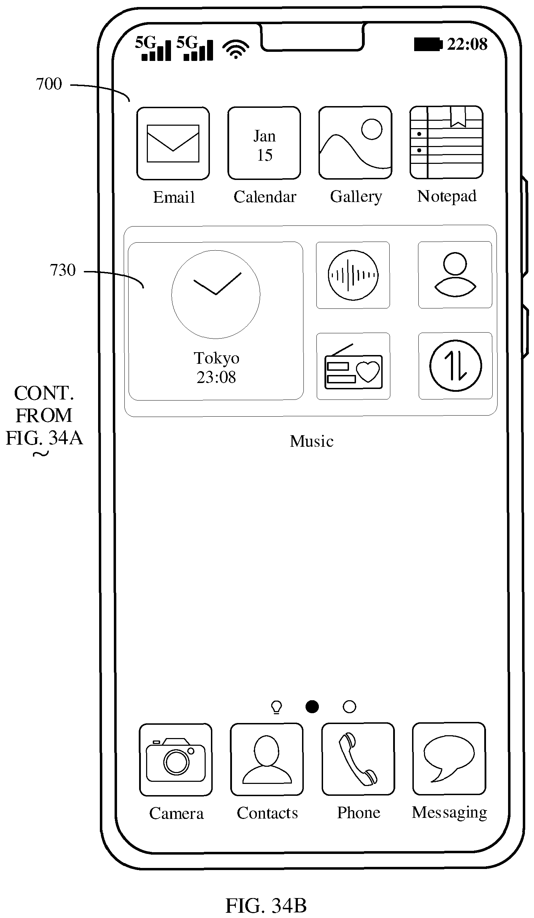

Subsequently, as shown in FIG. 34A and FIG. 34B, it is assumed that the user adjusts the option 741 to adjust a city from "Beijing" to "Tokyo". When the electronic device returns to the home screen 700, corresponding to a change of the city, time displayed on the card element 730 may be correspondingly adjusted from time "22:08" corresponding to "Beijing" to time "23:08" corresponding to "Tokyo".

### 2.3. Edit a combined card in the service center.

Because the service center of the electronic device is configured to manage a service card and a customized combined card on the electronic device, in some embodiments, the electronic device may also provide an entry for editing the combined card in the service center.

When the user wants to edit a combined card, the user may control the electronic device to enter the service center, and view a created combined card, create a new combined card, or edit a created combined card in the service center.

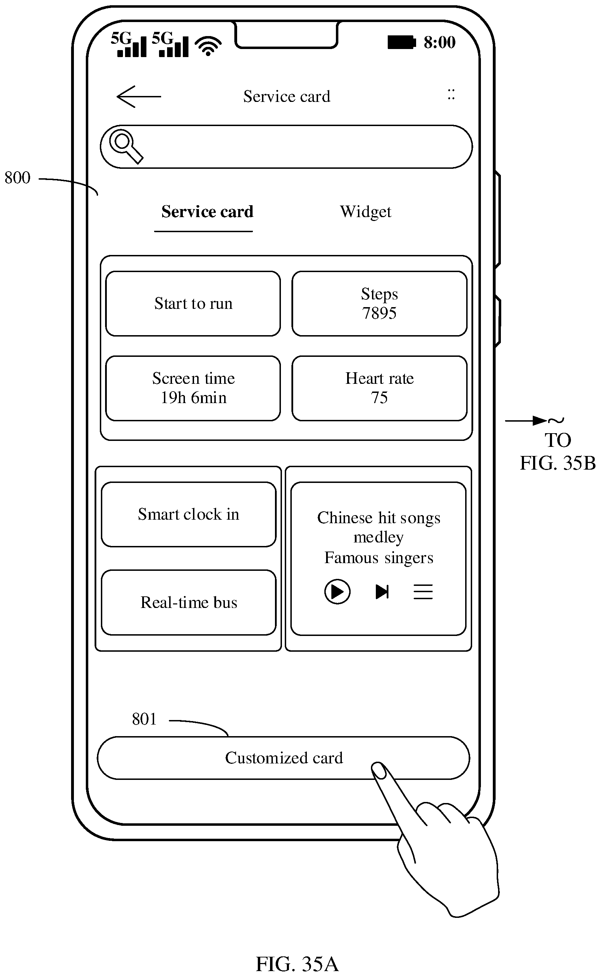

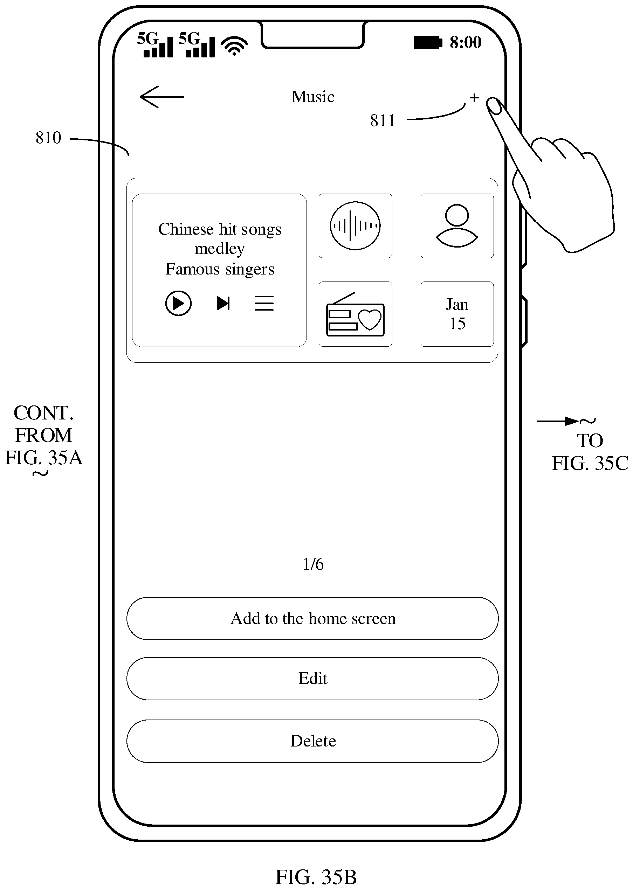

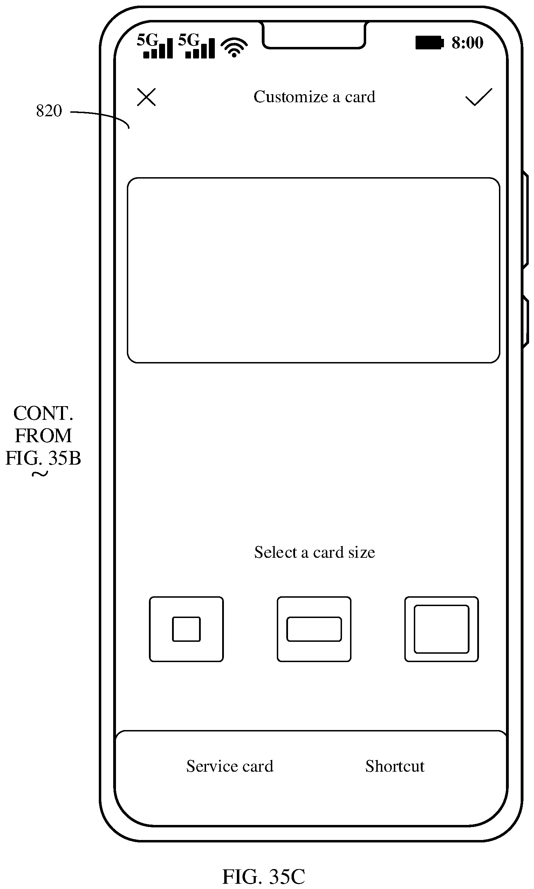

For example, as shown in FIG. 35A to FIG. 35C, a service center 800 of the electronic device may include a "Customized card" control 801.

When the user wants to view a created service card, the user may tap the control 801. In this case, the electronic device may enter a card library 810 of the combined card in response to the tap operation of the user.

The card library 810 may include one or more customized combined cards. For example, a number "1/6" is displayed in the card library 810 shown in FIG. 35A to FIG. 35C. The number may indicate that the card library includes six combined cards, and the first combined card is currently displayed.

Subsequently, if the user wants to create a new combined card, the user may tap a control 811. In this case, in response to the tap operation of the user on the control 811, the electronic device may enter a card editing interface 820 of a newly created combined card.

If the user wants to edit a created combined card, the user may use an "Edit" control in the card library to enter a card editing interface of the combined card.

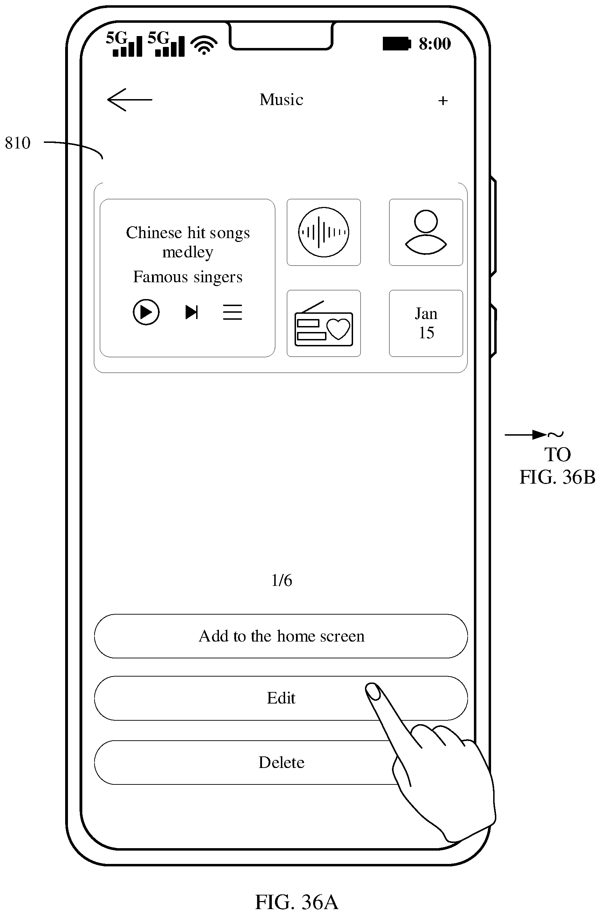

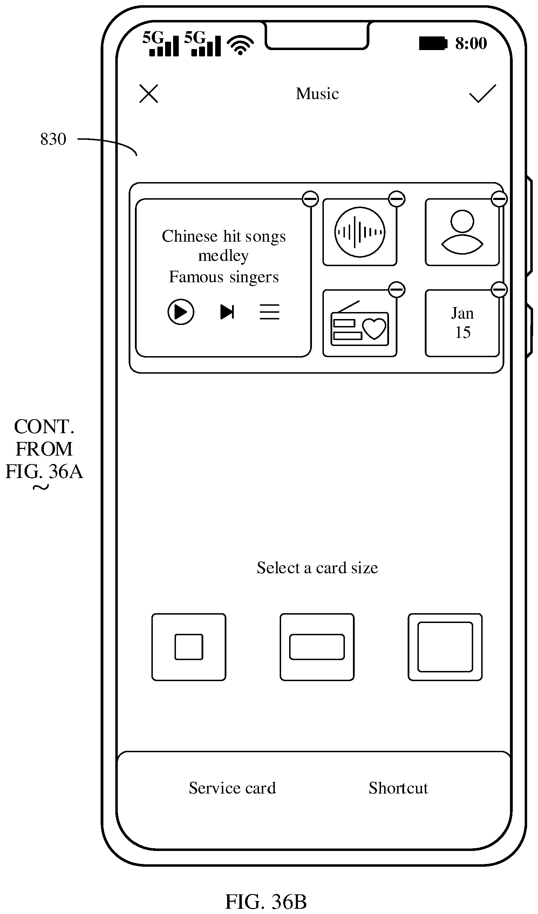

For example, as shown in FIG. 36A and FIG. 36B, if the user wants to edit a currently displayed "Music" combined card, the user may directly tap an "Edit" control.

In this case, in response to the tap operation of the user on the control, the electronic device may enter a card editing interface 830 corresponding to the "Music" combined card.

If the user wants to edit another created combined card, the user may change the currently displayed combined card. Then, the user taps the "Edit" control.

In this case, in response to the tap operation of the user on the control, the electronic device may enter a card editing interface corresponding to the currently displayed combined card.

In conclusion, in the card management method provided in this application, the user may edit the created combined card at an entry such as the home screen, the shallow editing state, or the service center. This is easy to operate and convenient to use, can effectively reduce difficulty of editing a combined card by the user, and improve use experience of the user.

It should be understood that a sequence of each step in the foregoing embodiments does not mean a sequence of execution. An execution sequence of each process should be determined by a function and internal logic of the process, and should not constitute any limitation on an implementation process in embodiments of this application.

In an actual application process, the electronic device may implement the card management method described in any one of the foregoing embodiments, or the electronic device may implement a combination of the foregoing plurality of embodiments.

The steps described in the foregoing embodiments are not all mandatory. In an actual application process, the electronic device may implement some or all of the steps in the foregoing embodiments, and/or add some steps, and/or replace some steps. A specific implementation of implementing the card management method by the electronic device is not limited in embodiments of this application.

In addition, the foregoing examples are described by using the "Music" application and the "AI Life" application as examples. Without loss of generality, the methods shown in the foregoing examples are also applicable to other applications, and the "Music" application and the "AI Life" application do not constitute any limitation on the first application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated module/unit is implemented in the form of the software functional unit and sold or used as an independent product, the integrated unit may be stored in a computer-readable storage medium. Based on this understanding, all or some of the processes in the methods in the foregoing embodiments may be implemented in this application by a computer program instructing related hardware. The computer program may be stored in a computer-readable storage medium. When the computer program is executed by a processor, the steps of the foregoing method embodiments may be implemented. The computer program includes computer program code, and the computer program code may be in a source code form, an object code form, an executable file, an intermediate form, or the like. The computer-readable storage medium may include any entity or apparatus that can carry the computer program code, a recording medium, a USB flash drive, a removable hard disk, a magnetic disk, a compact disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to legislation and patent practice, the computer-readable storage medium does not include the electrical carrier signal or the telecommunication signal.

Finally, it should be noted that the foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

## Claims

1. A card management method, comprising:
displaying a first interface of a first application;
detecting a first operation of a user on the first interface;
obtaining a display element of the first interface or the first application in response to the first operation; and
generating a combined card based on the display element of the first interface or the first application.

2. The method according to claim 1, wherein the first interface comprises M display elements; and
the generating a combined card based on the display element of the first interface or the first application specifically comprises:
detecting a first selection operation of selecting N display elements from the M display elements by the user, wherein M is greater than or equal to N, and M and N are positive integers; and
generating a combined card comprising the N display elements.

3. The method according to claim 1, wherein the generating a combined card based on the display element of the first interface or the first application comprises:
displaying a second interface, wherein the second interface comprises X display elements of the first application;
detecting a second selection operation of selecting Y display elements from the X display elements by the user, wherein X is greater than or equal to Y, and X and Y are positive integers; and
generating a combined card comprising the Y display elements.

4. The method according to claim 3, wherein the displaying a second interface specifically comprises:
displaying a to-be-edited combined card in a first area of the second interface, and displaying the X display elements in a second area of the second interface.

5. The method according to claim 4, wherein the second selection operation comprises:
dragging the Y display elements displayed in the second area to the first area.

6. The method according to claim 4 or 5, wherein the second interface further comprises a first control, and the first control is used to adjust a size of the combined card; and
before the generating a combined card comprising the Y display elements, the method further comprises:
detecting a second operation of the user on the first control; and
adjusting a size of the to-be-edited combined card in response to the second operation.

7. The method according to any one of claims 1 to 6, wherein the method further comprises:
displaying the generated combined card on a home screen, wherein the combined card comprises a first display element and a second display element;
detecting a removal operation of the user on the first display element; and
in response to the removal operation, removing the first display element displayed in the combined card.

8. The method according to claim 7, wherein the removal operation on the first display element specifically comprises:
dragging the first display element out of a third area that displays the combined card.

9. The method according to any one of claims 1 to 6, wherein the method further comprises:
displaying the generated combined card on a home screen, wherein the home screen further comprises a third display element;
detecting an addition operation of the user on the third display element; and
in response to the addition operation, displaying a combined card comprising the third display element.

10. The method according to claim 9, wherein before the displaying a combined card comprising the third display element, the method further comprises:
if space occupied by the third display element is greater than remaining space of the combined card, increasing the size of the combined card, so that the remaining space of the combined card is greater than or equal to the space occupied by the third display element.

11. The method according to any one of claims 1 to 6, wherein the method further comprises:
displaying the generated combined card on a home screen;
detecting a third operation of the user on the combined card; and
displaying an editing menu of the combined card in response to the third operation, wherein the editing menu of the combined card comprises an editing option for editing the combined card.

12. The method according to any one of claims 1 to 6, wherein the combined card comprises a fourth display element, and the method further comprises:
displaying the generated combined card on a home screen;
detecting a fourth operation of the user on the fourth display element; and
displaying an editing menu of the fourth display element in response to the fourth operation, wherein the editing menu of the fourth display element comprises an editing option for editing the fourth display element.

13. A card management method, comprising:
displaying a search interface;
receiving a search word entered by a user;
performing a search based on the search word, and displaying P search results;
detecting a third selection operation of selecting Q search results from the P search results by the user, wherein P is greater than or equal to Q, and P and Q are positive integers; and
generating, based on the Q search results, a combined card comprising at least one display element.

14. An electronic device, comprising a memory, a processor, and a computer program that is stored in the memory and that can be run on the processor, wherein the processor is configured to implement the method according to any one of claims 1 to 13 when executing the computer program.

15. A computer-readable storage medium, wherein the computer-readable storage medium is configured to store a computer program, and when the computer program is executed by a processor, the method according to any one of claims 1 to 13 is implemented.

16. A chip system, wherein the chip system comprises a memory and a processor, and the processor is configured to execute a computer program stored in the memory, to implement the method according to any one of claims 1 to 13.
